# EUROPEAN PATENT APPLICATION

(11) **EP 4 358 000 A1**
(43) Date of publication of application: **24.04.2024**
(21) Application number: 22824009.9
(22) Date of filing: 20.05.2022
(51) Int. Cl.: G06Q 20/06, G06Q 20/28, G06Q 20/22, G06Q 20/02, H04L 9/00

(54) **DIGITAL CURRENCY-BASED PAYMENT METHOD, PLATFORM, TERMINAL, AND PAYMENT SYSTEM**

(30) Priority: 16.06.2021 CN 202110668332; 21.10.2021 CN 202111229542
(71) Applicant: Digital Currency Institute, The People's Bank of China, Beijing 100071 (CN)
(72) Inventor: MU, Changchun, Beijing 100071 (CN); DI, Gang, Beijing 100071 (CN); QIAN, Youcai, Beijing 100071 (CN); LV, Yuan, Beijing 100071 (CN); DU, Jinzhao, Beijing 100071 (CN); LI, Changli, Beijing 100071 (CN)
(74) Representative: Casalonga
(86) International application number: PCT/CN2022/094113
(87) International publication number: WO 2022/262527

(57) **Abstract**

The present invention relates to a digital currency-based payment method, platform and system, and a terminal, and relates to the technical field of computers. An implementation of the method includes: receiving a target payment request for a first digital currency in a frozen state, the first digital currency in the frozen state being generated based on a pre-payment request and a pre-configured pre-payment deposit smart contract; generating a second digital currency according to a target payment amount indicated by the target payment request, the first digital currency, and a pre-configured pre-payment verification smart contract; and sending the second digital currency to a first account corresponding to the first digital currency. The implementation improves the transaction security, and is conducive to protecting the rights and interests of a user.

## Description

### Cross-Reference to Related Application

The present invention claims priority to Chinese patent application No. 202110668332.7, filed on June 16, 2021 and entitled "Digital Currency-Based Payment Method, Platform and System, and Terminal", and Chinese patent application No. 202111229542.2, filed on October 21, 2021 and entitled "Digital Currency-Based Payment Method, Platform and System", the inventions of which are hereby incorporated by reference in their entirety.

### Technical Field

The present invention relates to the technical field of computers, and in particular to a digital currency-based payment method, platform and system, and a terminal.

### Background

Pre-payment is a common payment scenario, such as member pre-recharge activities for various online electronic platforms, and pre-recharge activities for offline fitness places and training institutions.

In an existing pre-payment scenario, a currency pre-paid by a user is directly paid to an account of a service provider, and the service provider may directly use the pre-paid currency regardless of whether the service provider has provided a corresponding service. This may result in the fact that the user is unable to refund the pre-paid currency when the service provider terminates the service before the user has finished using the purchased service, which reduces the transaction security in the pre-payment scenario and is difficult to protect the rights and interests of the user.

### Summary

In view of this, embodiments of the present invention provide a digital currency-based payment method, platform and system, and a terminal, which may cause a first digital currency corresponding to a pre-payment amount to be in a frozen state based on a pre-configured pre-payment deposit smart contract, and at this time, a first user initiating a pre-payment request and a second user corresponding to a service provider are unable to use a second digital currency. When a target payment request for the first digital currency in the frozen state is received, the first digital currency in the frozen state is verified according to a pre-payment verification smart contract, and the second digital currency corresponding to a target payment amount is generated; or, the first digital currency in the frozen state is verified according to the pre-payment verification smart contract, and the second digital currency in an available state is generated according to a digital currency balance in a first account corresponding to the first digital currency. A denomination of the second digital currency is the sum of the target payment amount indicated by the target payment request and the digital currency balance. The second digital currency is sent to the first account corresponding to the service provider, so that the service provider may use the second digital currency. Therefore, through the pre-payment smart contracts, the service provider is prevented from using the pre-paid digital currency in advance, and the transaction security in a pre-payment scenario is improved. Further, the unused pre-paid digital currency may also be revoked or canceled, so that the unused pre-paid digital currency is returned to a second account corresponding to the first user, which solves the problem that the user is unable to refund the pre-paid currency in the existing pre-payment scenario, thereby further improving the transaction security in the pre-payment scenario and protecting the rights and interests of the user.

In order to achieve the above objective, according to an aspect of the embodiments of the present invention, the digital currency-based payment method is provided.

A digital currency-based payment method provided by the embodiments of the present invention, when applied to a payment platform, includes the following operations.

A target payment request for a first digital currency in a frozen state is received, the first digital currency in the frozen state being generated based on a pre-payment request and a pre-configured pre-payment deposit smart contract.

A second digital currency is generated according to a target payment amount indicated by the target payment request, the first digital currency, and a pre-configured pre-payment verification smart contract. A denomination of the second digital currency corresponds to the target payment amount, or the denomination of the second digital currency is the sum of a digital currency balance in a first account corresponding to the first digital currency and the target payment amount, and the second digital currency is in an available state.

The second digital currency is sent to the first account corresponding to the first digital currency.

In order to achieve the above objective, according to another aspect of the embodiments of the present invention, another digital currency-based payment method is provided.

A digital currency-based payment method provided by the embodiments of the present invention, when applied to a first terminal, includes the following operations.

In response to a first trigger, a pre-payment request is generated, and the pre-payment request is sent to a payment platform. The pre-payment request indicates a second account and a pre-payment amount.

A first digital currency corresponding to the pre-payment amount is received, and the first digital currency in a frozen state is stored in the second account.

In response to a second trigger, a target payment request for the first digital currency is generated, and the target payment request is sent to the payment platform.

In order to achieve the above objective, according to still another aspect of the embodiments of the present invention, a digital currency-based payment platform is provided.

The digital currency-based payment platform provided by the embodiments of the present invention includes a request receiving module, a verification module, and a currency sending module.

The request receiving module is configured to receive a target payment request for a first digital currency in a frozen state, the first digital currency in the frozen state being generated based on a pre-payment request and a pre-configured pre-payment deposit smart contract.

The verification module is configured to generate a second digital currency according to a target payment amount indicated by the target payment request, the first digital currency, and a pre-configured pre-payment verification smart contract. The denomination of the second digital currency corresponds to the target payment amount, or the denomination of the second digital currency is the sum of a digital currency balance in a first account corresponding to the first digital currency and the target payment amount, and the second digital currency is in an available state.

The currency sending module is configured to send the second digital currency to the first account corresponding to the first digital currency.

In order to achieve the above objective, according to another aspect of the embodiments of the present invention, a first terminal based on digital currency payment is provided.

The first terminal based on digital currency payment provided by the embodiments of the present invention includes a pre-payment request sending module, a frozen currency storage module, and a target payment request sending module.

The pre-payment request sending module is configured to generate, in response to a first trigger, a pre-payment request, and send the pre-payment request to a payment platform. The pre-payment request indicates a second account and a pre-payment amount.

The frozen currency storage module is configured to receive the first digital currency corresponding to the pre-payment amount, and store the first digital currency in a frozen state in the second account.

The target payment request sending module is configured to generate, in response to a second trigger, a target payment request for the first digital currency, and send the target payment request to the payment platform.

In order to achieve the above objective, according to another aspect of the embodiments of the present invention, a digital currency-based payment system is provided.

The digital currency-based payment system provided by the embodiments of the present invention includes any of the above payment platform and any of the above first terminal.

In order to achieve the above objective, according to another aspect of the embodiments of the present invention, an electronic device based on digital currency payment is provided.

The electronic device based on digital currency payment provided by the embodiments of the present invention includes: at least one processor and a storage apparatus, configured to store at least one program. The at least one program is executed by the at least one processor to cause the at least one processor to perform the digital currency-based payment method provided by the embodiments of the present invention.

In order to achieve the above objective, according to another aspect of the embodiments of the present invention, a computer-readable storage medium is provided.

The computer program is stored on a computer-readable storage medium provided by the embodiments of the present invention. The problem is executed by a processor to perform the digital currency-based payment method provided by the embodiments of the present invention.

One embodiment in the present invention has the following advantages or beneficial effects that: the first digital currency corresponding to the pre-payment amount may be in the frozen state based on the pre-configured pre-payment deposit smart contract, and at this time, the first user initiating the pre-payment request and the second user corresponding to the service provider are unable to use the second digital currency. When the target payment request for the first digital currency in the frozen state is received, the first digital currency in the frozen state is verified according to the pre-payment verification smart contract, and the second digital currency corresponding to the target payment amount is generated; or, the first digital currency in the frozen state is verified according to the pre-payment verification smart contract, and the second digital currency in the available state is generated according to the digital currency balance in the first account corresponding to the first digital currency. The denomination of the second digital currency is the sum of the target payment amount of the target payment request and the digital currency balance. The second digital currency is then sent to the first account corresponding to the service provider, so that the service provider may use the second digital currency. Therefore, through the pre-payment smart contracts, the service provider is prevented from using the pre-paid digital currency in advance, and the transaction security in the pre-payment scenario is improved. Further, the unused pre-paid digital currency may also be revoked or canceled, so that the unused pre-paid digital currency is returned to the second account corresponding to the first user, which solves the problem that the user is unable to refund the pre-paid currency in the existing pre-payment scenario, thereby further improving the transaction security in the pre-payment scenario and protecting the rights and interests of the user.

Further effects of the above non-conventional alternatives are described below with reference to the implementations.

### Brief Description of the Drawings

The drawings are configured to a better understanding of the present invention, and do not constitute improper limitations to the present invention. Wherein:
Fig. 1 is a schematic diagram of main steps of a digital currency-based payment method when applied to a payment platform according to an embodiment of the present invention.
Fig. 2 is a schematic diagram of main steps of another digital currency-based payment method when applied to a payment platform according to an embodiment of the present invention.
Fig. 3 is a schematic diagram of main steps of another digital currency-based payment method according to an embodiment of the present invention.
Fig. 4 is a schematic diagram of main modules of a digital currency-based payment platform according to an embodiment of the present invention.
Fig. 5 is a schematic diagram of main modules of a first terminal based on digital currency payment according to an embodiment of the present invention.
Fig. 6 is a schematic diagram of main modules of a digital currency-based payment system according to an embodiment of the present invention.
Fig. 7 is a schematic diagram of main steps of a digital currency-based payment method when applied to a payment system according to an embodiment of the present invention.
Fig. 8 is a schematic diagram of a generation process of a digital currency according to an embodiment of the present invention.
Fig. 9 is a schematic diagram of main steps of another digital currency-based payment method when applied to a payment system according to an embodiment of the present invention.
Fig. 10 is a schematic diagram of main steps of still another digital currency-based payment method when applied to a payment system according to an embodiment of the present invention.
Fig. 11 is a schematic diagram of another generation process of a digital currency according to an embodiment of the present invention.
Fig. 12 is a schematic diagram of main steps of yet another digital currency-based payment method when applied to a payment system according to an embodiment of the present invention.
Fig. 13 is a diagram of an exemplary system architecture in which an embodiment of the present invention may be applied.
Fig. 14 is a schematic structural diagram of a computer system suitable for implementing a terminal device or a server according to an embodiment of the present invention

### Detailed Description of the Embodiments

Exemplary embodiments of the present invention are described in detail below with reference to the drawings, including various details of the embodiments of the present invention to facilitate understanding, and should be regarded as merely exemplary. Thus, those of ordinary skilled in the art shall understand that, variations and modifications may be made on the embodiments described herein, without departing from the scope and spirit of the present invention. Likewise, for clarity and conciseness, descriptions of well-known functions and structures are omitted in the following description.

It is to be noted that the embodiments of the present invention and technical features in the embodiments may be combined with each other without conflict.

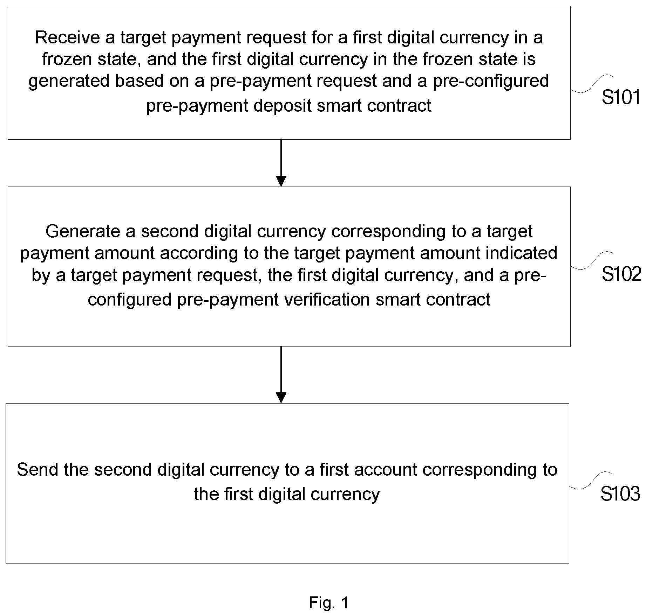

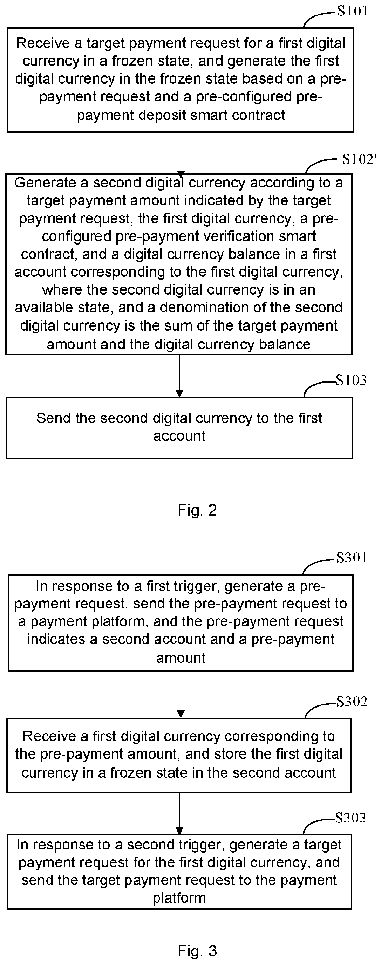

Fig. 1 and Fig. 2 are schematic diagrams of main steps of a digital currency-based payment method when applied to a payment platform according to an embodiment of the present invention.

As shown in Fig. 1 and Fig. 2, a digital currency-based payment method provided by the embodiments of the present invention, when applied to a payment platform, mainly includes the following steps.

At step S101, a target payment request for a first digital currency in a frozen state is received, the first digital currency in the frozen state being generated based on a pre-payment request and a pre-configured pre-payment deposit smart contract.

In an embodiment of the present invention, the first digital currency may be generated based on the pre-payment request and the pre-configured pre-payment deposit smart contract in the following manners: receiving the pre-payment request of a first terminal, the pre-payment request indicating a second account and a pre-payment amount; and generating the first digital currency corresponding to the pre-payment amount according to the pre-payment request, a third digital currency corresponding to the second account, and the pre-configured pre-payment deposit smart contract, a state of the first digital currency being the frozen state.

When a first user needs to make a pre-payment deposit, a pre-payment deposit interface on the first terminal may be triggered, and then the first terminal generates the pre-payment request in response to a first trigger of the first user. The pre-payment request indicates the second account and the pre-payment amount. The second account is an account of the first user, and the pre-payment amount corresponds to an amount to be deposited during this pre-payment.

It is worth mentioning that, in the embodiments of the present invention, terms "first", "second" and the like do not constitute the limitations to the solution, and do not have an absolute correspondence, for example, "first terminal" does not correspond to "first account". These terms are only for the convenience of distinguishing the different subjects to more clearly describe the embodiments of the present invention. In the embodiments of the present invention, a consumer corresponds to the first user, the corresponding terminal is the first terminal, the corresponding account is the second account, and corresponding signature information is second signature information. A service provider corresponds to the second user, the corresponding terminal is the second terminal, the corresponding account is the first account, and the corresponding signature information is first signature information. In addition, in the embodiments of the present invention, the digital currency includes both a legal digital currency that is commonly referred to as being issued by a central bank, and may also be suitable for currencies or assets in other electronic forms and digital forms, such as various electronic currencies, cryptocurrencies, and crypto assets.

When the first digital currency is generated, a signature of a fund source party needs to be obtained. In an embodiment of the present invention, in response to the second signature information corresponding to the second account being received, the first digital currency corresponding to the pre-payment amount is generated according to the pre-payment deposit smart contract and the third digital currency in the second account, and the first account corresponding to the first digital currency is determined.

Wherein, the first digital currency may be generated by writing the pre-payment deposit smart contract and/or the first account to the first digital currency as a field of the first digital currency, thereby determining the first account corresponding to the first digital currency. Furthermore, due to the mandatory nature of the pre-payment deposit smart contract, a correspondence between the first digital currency and the first account is unchangeable.

Wherein, the fund source party is the second account corresponding to the first terminal initiating the pre-payment request. After the second signature information corresponding to the second account is received, it indicates that the fund source party acknowledges that the pre-payment amount indicated by the pre-payment request may be frozen as the pre-paid digital currency corresponding to an account (the first account), and in this case, the first digital currency corresponding to the pre-payment amount is generated according to the pre-payment deposit smart contract and the third digital currency, to ensure the transaction security of a pre-payment process.

The second signature information is sent by the first terminal to the payment platform. The second signature information may be carried by the pre-payment request and sent to the payment platform. In an embodiment, after the payment platform receives the pre-payment request and prepares to generate the first digital currency, corresponding feedback information is sent to the first terminal, and the first terminal sends the second signature information to the payment platform according to the feedback information. The second signature information may be authentication information of the first user, or a payment password of the first user, etc.

In this process, a value of the first digital currency itself as an advance payment is not transferred to the service provider, but is only locked by the pre-payment deposit smart contract, that is, the state of the first digital currency is the frozen state. Moreover, the first digital currency is generated according to the pre-payment deposit smart contract. Due to the mandatory nature of the pre-payment deposit smart contract, the first digital currency is only configured to payment by a service provider, that is, the first account (an account of the service provider) corresponding to the first digital currency is determined, and only when the first digital currency is configured to payment to the first account, the first digital currency is paid by the first user normally.

Based on this, in an embodiment of the present invention, it is determined whether an account indicated by the target payment request is the same as the first account; in response to the account of the target payment request being the same as the first account, a second digital currency corresponding to a target payment amount is generated according to the target payment amount indicated by the target payment request, the first digital currency, and a pre-configured pre-payment verification smart contract, and in response to the account of the target payment request not being the same as the first account, the target payment request is rejected.

In this embodiment, only when the account indicated by the target payment request is the same as the first account corresponding to the first digital currency determined by the pre-payment deposit smart contract, the payment platform responds to the target payment request, and generates the second digital currency corresponding to the target payment amount according to the pre-payment verification smart contract. When the account indicated by the target payment request is different from the first account, it indicates that the target payment request is not a request to use the pre-paid first digital currency for the service provider agreed upon in the pre-payment deposit smart contract, and at this time, the payment platform rejects the target payment request to ensure the transaction security and protect the rights and interests of the service provider.

In another embodiment of the present invention, it is determined whether the account indicated by the target payment request this time is the same as the first account; if so, the second digital currency is generated according to the target payment amount indicated by the target payment request, the first digital currency, and the pre-configured pre-payment verification smart contract, and if not, the target payment request is rejected.

In this embodiment, only when the account indicated by the target payment request this time is the same as the first account corresponding to the first digital currency determined by the pre-payment deposit smart contract, the payment platform responds to the target payment request, and generates the second digital currency with a denomination equal to the sum of the target payment amount and a digital currency balance in the first account according to the pre-payment verification smart contract. When the account indicated by the target payment request this time is different from the first account, it indicates that the target payment request is not the request to use the pre-paid first digital currency for the service provider agreed upon in the pre-payment deposit smart contract, and at this time, the payment platform rejects the target payment request to ensure the transaction security and protect the rights and interests of the service provider.

In addition, in an embodiment of the present invention, after the first digital currency is generated, the payment platform may also sign the first digital currency by using own third signature information, and generate and store first pre-payment transaction information according to the signed first digital currency, the second signature information of the second account, and the pre-payment deposit smart contract.

According to the above embodiment, the payment platform generates the first digital currency only after the second signature information corresponding to the second account is obtained. Here, after the first digital currency is generated, the payment platform signs the first digital currency by using the own third signature information, to generate the first pre-payment transaction information according to the first signature information, the second signature information, and the pre-payment deposit smart contract. The first pre-payment transaction information may record the pre-payment balance as an amount (a denomination of the first digital currency) deposited during this pre-payment, and the number of changes in the advance payment as 0.

In an embodiment of the present invention, the pre-payment amount (a denomination of the first digital currency) may be configured to payment to a certain service provider, may also be configured to payment to a merchant in a merchant set, such as a certain merchant in an e-commerce platform or a certain merchant in a large supermarket, and may also be configured to payment to a merchant in a certain scenario, such as a certain merchant in a transportation scenario or a certain merchant in an entertainment scenario.

When the pre-payment amount is configured to payment to the merchant in a certain scenario, the pre-payment request further indicates a scenario identifier and/or a service identifier. In this case, the payment platform may generate the first pre-payment transaction information according to the first digital currency, the second signature information, the pre-payment deposit smart contract, and the scenario identifier and/or the service identifier.

Wherein, the scenario identifier corresponds to the scenario, and different scenarios have different scenario identifiers, for example, a transportation scenario and an entertainment scenario have different scenario identifiers. When the pre-payment amount is configured to payment to the merchant in the certain scenario, the corresponding scenario identifier is carried when the pre-payment request is sent, so that when the pre-payment amount (the first digital currency in the frozen state) is used subsequently, it may be easily determined whether the target payment request is correct for the corresponding pre-payment amount according to the scenario identifier, thereby improving the transaction security. In addition, the service identifier may be a serial number corresponding to this pre-payment process (i.e., this pre-payment service), which may be carried and sent to the payment platform when the first terminal sends the pre-payment request, or may be generated by the payment platform after the pre-payment request is received, that is, the service identifier may be generated by the first terminal or the payment platform.

The first pre-payment transaction information is generated by the payment platform not only according to the first digital currency, the first signature information, and the pre-payment deposit smart contract, but also according to the scenario identifier and the service identifier. Therefore, the first pre-payment transaction information not only records the pre-payment balance as the amount (the denomination of the first digital currency) deposited during this pre-payment, and the number of changes in the advance payment as 0, but also records the corresponding scenario identifier and the service identifier.

It is understandable that after the corresponding first pre-payment transaction information is generated, the payment platform may send the corresponding feedback information to the first terminal of the first user and the second terminal of the service provider (the second user), so that the first terminal or the second terminal carries the correct information when sending the target payment request. For example, when the pre-payment request indicates the scenario identifier and/or the service identifier, the target payment request sent by the first terminal or the second terminal also indicates the scenario identifier and/or the service identifier.

In addition, in an embodiment of the present invention, the first digital currency may be generated in the following manners: determining the third digital currency in the second account and an available denomination of the third digital currency; and determining a generation method of the first digital currency according to the size of the available denomination and the pre-payment amount, and generating the first digital currency corresponding to the pre-payment amount according to the generation method.

In an embodiment of the present invention, when the available denomination is greater than the pre-payment amount, it is determined that the generation method is to split the third digital currency. Then, when the first digital currency is generated, the third digital currency may be split into the first digital currency and a fourth digital currency, the sum of the denomination of the first digital currency and the denomination of the fourth digital currency is equal to the available denomination, a state of the fourth digital currency is the available state, and the third digital currency is canceled.

For example, when the available denomination of the third digital currency in the second account is 100 and the pre-payment amount is 10, the generation method of the requested first digital currency is to split the available digital currency. Here, the third digital currency with the available denomination of 100 is split into the first digital currency with the denomination of 10 and the fourth digital currency with the denomination of 90, the denomination of the first digital currency is equal to the requested pre-payment amount, the first digital currency is in the frozen state, the fourth digital currency is in the available state, and meanwhile, the third digital currency in the second account is canceled, that is, the third digital currency is split into the first digital currency in the frozen state and the fourth digital currency in the available state.

In another embodiment of the present invention, when the available denomination of the third digital currency in the second account is equal to the pre-payment amount, the generation method of the first digital currency is to identify the third digital currency with the available denomination equal to the pre-payment amount as the first digital currency, that is, the third digital currency with the available denomination equal to the pre-payment amount is identified as the first digital currency.

When the payment platform determines that multiple third digital currencies in the available state are stored in the second account, and an available denomination of the multiple third digital currencies is equal to the pre-payment amount, any third digital currency of the plurality of third digital currencies equal to the pre-payment amount may be identified as the first digital currency.

Wherein, the identification of the digital currency mainly refers to the identification of the state of the digital currency. For example, when the payment platform determines the third digital currency with the available denomination equal to the pre-payment amount, a state of the third digital currency may be identified as the "frozen" state or a "pre-payment" state. The identified digital currency is no longer configured to market circulation in other general scenarios, but is only configured to a pre-payment scenario.

In addition, when the second account has the multiple third digital currencies with the available denominations less than the pre-payment amount, the first digital currency may be generated by combining the multiple third digital currencies with the available denominations less than the pre-payment amount.

For example, when the payment platform determines the multiple third digital currencies in the second account as an available digital currency A and an available digital currency B, where an available denomination of the available digital currency A is 2, an available denomination of the available digital currency B is 8, and the pre-payment amount is 10, the available digital currency A and the available digital currency B are combined to generate the first digital currency.

Of course, a denomination obtained by combining the multiple third digital currencies with the available denominations less than the pre-payment amount may be greater than the pre-payment amount, that is, the sum of the multiple available denominations may be greater than the pre-payment amount. For example, when the payment platform determines the multiple third digital currencies in the second account as an available digital currency C and an available digital currency D, where an available denomination of the available digital currency C is 4, an available denomination of the available digital currency D is 8, and the pre-payment amount is 10, at this time, a denomination obtained by combining the available digital currency C and the available digital currency D is 12, that is, the combined denomination is greater than the pre-payment amount of 10.

In this case, after the available digital currency C and the available digital currency D are combined to generate the digital currency with the denomination of 12, a digital currency with the denomination of 12 is split into a digital currency with the denomination of 10 and a digital currency with the denomination of 2. The splitting process is the same as that of the available digital currency with the available denomination greater than the pre-payment amount, which will not be elaborated herein. Then, the digital currency with the denomination of 10 is identified as the first digital currency. In addition, the digital currency with the denomination of 10 and the digital currency with the denomination of 2 are generated directly according to the available digital currency C and the available digital currency D. In an embodiment, at least one third digital currency is split first, and then a split third digital currency is combined with other third digital currencies to generate the first digital currency corresponding to the pre-payment amount. For example, the available digital currency D is split into a digital currency with the denomination of 6 and a digital currency with the denomination of 2, and then the digital currency with the denomination of 6 and the available digital currency D with the denomination of 4 in the second account are combined to generate the first digital currency corresponding to the pre-payment amount of 10.

It is worth mentioning that the third digital currency in the second account may include both the third digital currency in the available state and a frozen digital currency in the frozen state. At this time, the frozen digital currency is a pre-generated advance payment corresponding to the previous pre-payment request. Because the frozen digital currency may only be used in the pre-payment scenario corresponding to the pre-payment request thereof, the first digital currency is generated here only according to the third digital currency in the available state, that is, the first digital currency is generated according to the third digital currency in the available state in the second account.

After the first digital currency is generated, the first digital currency in the frozen state may still be frozen in the second account, that is, the first digital currency generated according to the pre-payment deposit smart contract is still stored in the second account of the second account of the consumer, and the value of the first digital currency is not transferred to the service provider, but is only locked by the pre-payment deposit smart contract, so that the first digital currency is only consumed by the service provider corresponding to the pre-payment, that is, the first digital currency is only transferred to the first account.

Of course, the first digital currency in the frozen state may also be frozen in the first account (the account corresponding to the service provider) or other third parties (such as the payment platform or other trusted third parties). It is understandable that even if the first digital currency is frozen in the first account, that is, the first digital currency is stored in the account of the service provider, because the first digital currency is in the frozen state, the service provider is unable to use the first digital currency at will, so that the transaction security is still ensured and the rights and interests of the consumer are protected.

At step S102, the second digital currency corresponding to the target payment amount is generated according to the target payment amount indicated by the target payment request, the first digital currency, and the pre-configured pre-payment verification smart contract.

As shown in Fig. 2, the second digital currency may also be generated by the following S102': generating the second digital currency according to the target payment amount indicated by the target payment request, the first digital currency, the pre-configured pre-payment verification smart contract, and the digital currency balance in the first account corresponding to the first digital currency. Wherein, the second digital currency is in the available state, and the denomination of the second digital currency is the sum of the target payment amount and the digital currency balance.

In the embodiments of the present invention, in response to the target payment request, the second digital currency available to the service provider is generated directly according to the target payment amount and the digital currency balance in the first account of the service provider, and the second digital currency is in the available state to facilitate the service provider to apply the second digital currency to a general payment scenario. The digital currency balance in the first account corresponds to the digital currency balance in the second terminal, that is, the digital currency balance of the service provider. It is understandable that the digital currency balance corresponds to the denomination of the digital currency in the available state in the second terminal. When the second terminal has multiple digital currencies in the available state, the digital currency balance in the first account is the sum of the denominations of the multiple digital currencies in the available state. When the second terminal has only one digital currency in the available state, the digital currency balance in the first account is the denomination of the digital currency in the available state.

The second digital currency is generated directly according to the digital currency balance in the first account, that is, according to the digital currency in the available state in the second terminal. In an embodiment, the payment platform may cancel the digital currency in the available state in the second terminal, and generate the second digital currency according to the sum of the denomination of the digital currency in the available state and the target payment amount. For example, when the sum of the denominations of the digital currencies in the available state in the second terminal of the service provider (the digital currency balance in the first account) is 100, the target payment amount is 10, and the denomination of the first digital currency in the frozen state is 30, then the denomination of the second digital currency generated in response to the target payment request is 110. The payment platform also generates a new first digital currency with the denomination of 20 according to the target payment amount, the new first digital currency is still in the frozen state, and a fifth digital currency corresponding to the original digital currency balance of 100 in the second terminal is canceled.

According to the above embodiment, when the pre-payment request indicates the scenario identifier and/or the service identifier, the target payment request sent by the first terminal or the second terminal also indicates the scenario identifier and/or the service identifier. In this case, because the pre-payment amount is configured for payment to the merchants in the scenario, the scenario identifier is verified; or, if the pre-payment amount does not specify the scenario, then only the corresponding service identifier is verified. In this implementation, it may be determined whether the scenario identifier and/or the service identifier indicated by the target payment request are/is the same as the scenario identifier and/or the service identifier indicated by the first pre-payment transaction information, respectively; in response to the scenario identifier and/or the service identifier of the target payment request being the same as the scenario identifier and/or the service identifier of the first pre-payment transaction information, respectively, the second digital currency corresponding to the target payment amount is generated according to the target payment amount indicated by the target payment request, the first digital currency, and the pre-configured pre-payment verification smart contract; or the second digital currency is generated according to the target payment amount indicated by the target payment request, the first digital currency, the pre-configured pre-payment verification smart contract, and the digital currency balance in the first account corresponding to the first digital currency; and in response to the scenario identifier and/or the service identifier of the target payment request not being the same as the scenario identifier and/or the service identifier of the first pre-payment transaction information, respectively, the target payment request is rejected.

Here, when the first pre-payment transaction information includes the scenario identifier and the service identifier, if the scenario identifier and the service identifier carried in the target payment request are the same as the scenario identifier and the service identifier in the first pre-payment transaction information, then the second digital currency may be generated according to the target payment request, otherwise the payment platform directly rejects the target payment request, that is, there is no need to generate the second digital currency according to the target payment request. In an embodiment, when the first pre-payment transaction information includes the service identifier, if the service identifier carried in the target payment request is the same as the service identifier in the first pre-payment transaction information, then the second digital currency may also be generated according to the target payment request, otherwise the payment platform directly rejects the target payment request, that is, there is no need to generate the second digital currency according to the target payment request. In an embodiment, when the first pre-payment transaction information includes the scenario identifier, if the scenario identifier carried in the target payment request is the same as the scenario identifier in the first pre-payment transaction information, then the second digital currency may also be generated according to the target payment request, otherwise the payment platform directly rejects the target payment request, that is, there is no need to generate the second digital currency according to the target payment request.

In an embodiment of the present invention, when generating the second digital currency, the payment platform may also determine whether the target payment request includes signature information of a sending end of the target payment request, and in response to the target payment request comprises signature information of the sending end of the target payment request, generate the second digital currency corresponding to the target payment amount.

The target payment request may be initiated by the first terminal or the second terminal, that is, the target payment request may be initiated by the consumer or the service provider, and then the sending end of the target payment request may be the first terminal or the second terminal.

When the sending end of the target payment request is the first terminal, the signature information of the sending end is the second signature information of second account information. When the second digital currency is generated, it is necessary to obtain the second signature information to represent the authentication of the first user on the pre-payment amount used this time. Of course, if the sending end is the first terminal, the payment platform may also obtain the first signature information from the second terminal to obtain the authentication of the service provider on the available service.

When the sending end of the target payment request is the second terminal, the signature information of the sending end is the first signature information of first account information, and the payment platform determines that the service provider may provide the corresponding service according to the first signature information. In addition, the payment platform also needs to obtain the second signature information from the first terminal to obtain the authentication of the first user on the pre-payment amount used this time.

After the signature information of the sending end of the target payment request is obtained, and the second digital currency is generated, in an embodiment of the present invention, second pre-payment transaction information may be generated according to the pre-payment verification smart contract, the signature information of the sending end, the third signature information, and a difference between the first digital currency and the target payment amount.

Here, when the pre-payment amount is used, the first pre-payment transaction information corresponding to the target payment request may be found according to the service identifier, the scenario identifier, the first account and/or the second account, and other information carried in the target payment request, and then the second digital currency corresponding to the target payment amount is generated according to the pre-payment verification smart contract and the first digital currency corresponding to the first pre-payment information. The process of generating the second digital currency is basically the same as the above process of generating the first digital currency. For example, the first digital currency is split to obtain the second digital currency corresponding to the target payment amount and a new first digital currency with the denomination equal to a difference between the first digital currency and the second digital currency. The new first digital currency is still in the frozen state for the next pre-payment in the same pre-payment scenario. In an embodiment, the second digital currency is generated according to the pre-payment verification smart contract, the first digital currency corresponding to the first pre-payment transaction information, and the digital currency balance in the first account. The process of generating the second digital currency may be as follows: generating a new second digital currency according to the sum of the digital currency balance in the first account and the current target payment amount, and canceling the fifth digital currency corresponding to the digital currency balance in the first account. The new second digital currency is in the available state, so that the service provider may conduct other transactions according to the second digital currency. In addition, the payment platform may also generate the new first digital currency according to the difference between the first digital currency and the target payment amount.

That is, in an embodiment of the present invention, each time the target payment request for the first digital currency is received, the new first digital currency in the frozen state may be generated according to the difference between the first digital currency and the target payment amount, and the pre-payment verification smart contract. The new first digital currency in the frozen state may be used in a next pre-payment scenario.

In addition, in an embodiment of the present invention, pre-payment may also be performed by using an agreed pre-payment deadline and paying on schedule according to the pre-payment deadline, and in this case, the pre-payment request also indicates the payment deadline and a payment limit corresponding to the payment deadline. In response to monitoring that a current time meets the payment deadline, the second digital currency corresponding to the payment limit is generated according to the payment limit and the pre-payment verification smart contract, and the second digital currency corresponding to the payment limit is sent to the first account.

For example, if the payment deadline indicated by the pre-payment request is monthly payment, and the payment limit corresponding to the payment deadline is 1, then when the payment platform monitors that an interval between the current time and the receipt time of the pre-payment request is 1 month, the second digital currency with the denomination of 1 is generated according to the first digital currency in the frozen state, and the second digital currency with the denomination of 1 is sent to the first account of the service provider. In an embodiment, the payment deadline indicated by the pre-payment request is a year, month, and day, and in response to the current time meets the corresponding year, month, and day, the payment platform may generate the second digital currency corresponding to the payment limit according to the first digital currency in the frozen state. The process of generating the second digital currency corresponding to the payment limit is the same as the above process of generating the digital currency corresponding to the target payment amount, which will not be elaborated herein.

In response to monitoring that the current time meets the payment deadline, the second digital currency may also be generated according to the payment limit, the digital currency balance in the first account, and the pre-payment verification smart contract. The denomination of the second digital currency is the sum of the payment limit and the digital currency balance.

For example, if the payment deadline indicated by the pre-payment request is monthly payment, and the payment limit corresponding to the payment deadline is 1, then when the payment platform monitors that the interval between the current time and the receipt time of the pre-payment request is 1 month, the new second digital currency in the available state and the new first digital currency in the frozen state are generated according to the first digital currency in the frozen state. For example, if the first digital currency in the frozen state is 8 and the available balance in the first account is 10, the denomination of the second digital currency generated is 11, and the denomination of the new first digital currency generated is 7. In an embodiment, the payment deadline indicated by the pre-payment request is a year, month, and day, and in response to the current time meets the corresponding year, month, and day, the payment platform may generate the second digital currency according to the first digital currency in the frozen state.

After the second digital currency is generated, the original first pre-payment information no longer represents the current payment state, and therefore, the second pre-payment transaction information may be generated according to the pre-payment verification smart contract, the first signature information and/or the second signature information, the third signature information of the payment platform itself, and the new first digital currency. The amount (the target payment amount) of this payment has been deducted from the pre-payment balance in the second pre-payment information, that is, the pre-payment amount in the second pre-payment information is the difference between the first digital currency and the target payment amount (the denomination of the new first digital currency), and the number of changes in the advance payment in the second pre-payment information is updated to 1. After the second pre-payment information is generated, the payment platform also records the original first pre-payment information as invalid.

It is understood that when the target payment request corresponding to the same pre-payment scenario is received next time, the payment platform may find the current valid second pre-payment information, and respond to the target payment request according to the first digital currency in the second pre-payment information to complete the pre-payment, and then continue to update the second pre-payment information. The operation of updating the second pre-payment information is basically the same as the operation of replacing the first pre-payment information with the second pre-payment information, which will not be elaborated herein. In other words, each time the target payment request for the pre-paid digital currency is received, the target payment request is responded according to the current valid pre-payment information to complete the pre-payment, and then the valid pre-payment information is updated.

In addition, when the new first digital currency is generated according to the pre-payment verification smart contract, the pre-payment verification smart contract may also be written to the new first digital currency as the field to ensure the transaction security.

During the continuous use, a remaining pre-payment balance may be insufficient to implement a current target payment request, that is, the pre-payment balance may be less than the target payment amount, and in this case, the pre-payment balance may be recovered according to a pre-configured pre-payment recovery smart contract. In an embodiment of the present invention, when it is determined that the denomination of the second digital currency is less than the target payment amount, a pre-payment recovery prompt is sent to the first terminal initiating the pre-payment request. Therefore, the first user may know that the pre-payment balance is insufficient according to the pre-payment recovery prompt displayed by the first terminal, thereby initiating the corresponding pre-payment recovery request through the first terminal.

When receiving the pre-payment recovery request sent by the first terminal according to the pre-payment recovery prompt, the payment platform verifies whether the first account and the second account indicated by the pre-payment recovery request are empty, and in response to the first account and a second account of the pre-payment recovery request not being empty, obtains the first signature information of the first account and the second signature information of the second account; and generates, in response to the first signature information and the second signature information are obtained, the new first digital currency in the frozen state according to the pre-configured pre-payment recovery smart contract, an amount indicated by the pre-payment recovery request, and the first digital currency.

Here, when the new first digital currency in the frozen state is generated, the pre-payment recovery smart contract may also be written to the new first digital currency as the field.

The pre-payment recovery smart contract is configured to increase recharge items under the existing pre-payment items. Therefore, the first user should input the second account (a payment account) and the first account (a receipt account) corresponding to the existing pre-payment items through the first terminal when initiating the pre-payment recovery request. Then, when receiving the pre-payment recovery request, the payment platform may verify whether the first account and the second account indicated by the pre-payment recovery request are empty, and if the first account or the second account is empty, reject the pre-payment recovery request. In response to the first account and the second user are not empty, the payment platform may also verify a recovery amount indicated by the pre-payment recovery request, and the recovery amount should be greater than or equal to 0. If the verification passes, the payment platform obtains the first signature information and the second signature information.

The second signature information may be carried by the pre-payment recovery request and sent to the payment platform, or may be prompted by the first terminal for input after the payment platform passes the verification of whether the first account and the second account are empty, and the recovery amount. The first signature information may be prompted by the second terminal for input after the payment platform passes the verification. When the payment platform receives the second signature information, it indicates that the first user passes the authentication of this pre-payment recovery request. Similarly, when the payment platform receives the first signature information, it indicates that the service provider (the second user) confirms to continue to provide the corresponding service for the recovery request. Therefore, if the payment platform obtains the first signature information and the second signature information, it indicates that both the payer and the service provider corresponding to the recovery request approve the current recovery, and at this time, the payment platform generates the new first digital currency according to the pre-payment recovery smart contract, the amount indicated by the pre-payment recovery request, the digital currency in the available state in the second account, and the first digital currency corresponding to the current pre-payment balance. The first digital currency is still in the frozen state.

It is understandable that the denomination of the new first digital currency is equal to the sum of the denomination of the first digital currency generated after the last payment and the recovery amount. Through the pre-payment recovery smart contract, the recovery of the pre-payment amount is realized, and the payment platform may also generate new pre-payment transaction information after the recovery, to update the pre-payment balance in the pre-payment transaction information.

In addition, the consumer or the service provider may query the pre-payment balance according to the scenario identifier, the service identifier, the first account, the second account, and other information through a pre-configured pre-payment query smart contract, query payment detail data of the pre-payment process, and perform sorting and paging operations on the payment detail data according to a verification time order.

At step S103, the second digital currency is sent to the first account corresponding to the first digital currency.

In an embodiment of the present invention, if the target payment request is a universal payment operation, the second digital currency in the available state may be sent to the first account after the state of the second digital currency is set to the available state through the payment platform, that is, the second digital currency in the available state is sent to the first account of the service provider, and then the service provider may use the second digital currency in any payment scenario of the digital currency.

If the target payment request still corresponds to the pre-payment operation, the payment platform may directly send the second digital currency in the frozen state to the first account. After obtaining the second digital currency in the frozen state, the first account is still unable to use the second digital currency as a universal digital currency in other payment scenarios, and only applies the second digital currency to the same pre-payment scenario as the first digital currency.

When generating the second digital currency, the payment platform also generates the new first digital currency according to the difference between the first digital currency and the target payment amount, and the pre-payment verification smart contract, and the new first digital currency is in the frozen state. The denomination of the new first digital currency is the pre-payment amount remaining after this response to the target payment request.

If the consumer or the service provider needs to cancel the remaining pre-payment amount for some reason, the consumer and the service provider may send a cancellation request for the first digital currency to the payment platform through the first terminal and the second terminal, respectively. It is understandable that the first digital currency referred to here is the first digital currency generated after the last payment. The payment platform obtains the first signature information of the first account and the second signature information of the second account corresponding to the pre-payment request when receiving the cancellation request for the first digital currency, sets the state of the first digital currency to the available state when obtaining the first signature information and the second signature information, and sends the first digital currency to the second account.

If the payment platform obtains the first signature information and the second signature information, it indicates that both the consumer and the service provider approve a cancellation operation for the current advance payment, and at this time, the payment platform may restore the frozen first digital currency to the available state and send the first digital currency to the second account to return the unused advance payment to the first user (the consumer), so that the first user may apply the advance payment to other general payment scenarios.

If the payment platform only receives the signature information of one party, for example, the payment platform only receives the first signature information or the second signature information, it indicates that at least one of the consumer and the service provider does not approve the cancellation operation for the current advance payment, and at this time, the payment platform may verify the cancellation request as a third party and determine whether to respond to the cancellation request according to a verification result.

The cancellation request may be initiated by the service provider or the consumer. For a revocation request actively initiated by the consumer, that is, in response to the cancellation request being the revocation request sent by the first terminal, the payment platform may determine whether the first digital currency is revocable according to a pre-configured pre-payment revocation smart contract, in response to the first digital currency being revocable, obtain the first signature information corresponding to the first account and the second signature information corresponding to the second account, and in response to the first digital currency not being revocable, reject the revocation request.

Here, if the advance payment is specified as a revocable contract when being created, the revocation may be performed on the advance payment, otherwise the contract cannot be revoked. During operation, the payment platform may query the pre-payment revocation smart contract to determine whether the advance payment is the revocable contract, in response to the advance payment not being the revocable contract, reject the revocation request, and in response to the advance payment being the revocable contract, return, after the first signature information and the second signature information are obtained, the advance payment in the original way, and update the pre-payment balance to 0. The first terminal and the second terminal may also be notified that the contract is revoked, and the pre-payment transaction information is changed. It is understandable that in a case of the normal use of the advance payment, that is, after the second digital currency is generated according to the target payment request and the first digital currency, and the second digital currency is sent to the first account, the first terminal and the second terminal may also be notified of the amount spent this time.

In addition, the cancellation request may be initiated by the service provider, for example, the service provider cancels the pre-payment service of the consumer according to a terms of service, and at this time, the payment platform returns the advance payment in the original way after the first signature information and the second signature information are obtained, and updates the pre-payment balance to 0. The first terminal and the second terminal may also be notified that the contract is revoked, and the pre-payment transaction information is changed.

In addition, the service provider may forcibly shut down the service corresponding to the pre-payment according to abnormal internal transactions, or incapability of continuing to provide the service due to the closure of a store, or administrative instructions and other mandatory instructions, and at this time, the pre-payment service needs to be terminated and the advance payment is returned. In this embodiment, the payment platform receives a termination instruction, sets the state of the first digital currency to the available state according to the termination instruction and a pre-configured pre-payment termination smart contract, sends the first digital currency to the second account, and sends a pre-payment termination prompt message to the first terminal initiating the pre-payment request and the second terminal corresponding to the first account to notify the first terminal and the second terminal that the pre-payment service is terminated. In addition, the payment platform may also change the pre-payment transaction information according to the returned advance payment, such as changing the pre-payment balance to 0.

In an embodiment of the present invention, the payment platform may provide multiple interfaces to receive different requests, such as a frozen payment interface and an unfrozen payment interface. The frozen payment interface corresponds to operations such as deposit and recovery, and the unfrozen payment interface corresponds to operations such as verification and revocation.

In an embodiment of the present invention, the pre-payment request is received through the frozen payment interface. When a first reversal transaction request is received through the frozen payment interface, the first signature information of the first account and the second signature information of the second account corresponding to the pre-payment request are obtained. In response to the first signature information and the second signature information being obtained, the state of the first digital currency is set to the available state, and the first digital currency is sent to the second account.

Here, the frozen payment interface may not only receive the pre-payment request to cause the payment platform to perform a deposit operation, but also receive the first reversal transaction request corresponding to the pre-payment request. In response to the first reversal transaction request, a flow direction of the digital currency is opposite to the response process of the pre-payment request, that is, in the process of responding to the first reversal transaction request, the state of the first digital currency is set to the available state, and the first digital currency is sent to the second account. For example, after the wrong pre-payment request is initiated, the user may initiate the first reversal transaction request to a service platform through the first terminal, and the payment platform may respond to the first reversal transaction request after the first signature information and the second signature information are obtained, to return the first digital currency frozen due to the wrong pre-payment request.

Similarly, in an embodiment of the present invention, the target payment request is received through the unfrozen payment interface. When a second reversal transaction request is received through the unfrozen payment interface, the first signature information corresponding to the first account and the second signature information of the second account corresponding to the pre-payment request are obtained. In response to the first signature information and the second signature information being obtained, the second digital currency is canceled, and the first digital currency is updated according to the target payment amount.

The unfrozen payment interface may not only receive the target payment request to cause the payment platform to perform a verification operation, but also receive the second reversal transaction request corresponding to the target payment request. In response to the second reversal transaction request, the flow direction of the digital currency is opposite to the response process of the target payment request. That is, in the process of responding to the second reversal transaction request, the second digital currency is canceled.

In response to the original second digital currency corresponds to the target payment amount, the first digital currency in the frozen state is regenerated according to the second digital currency and the new first digital currency generated. For example, after the wrong target payment request is initiated, the user may initiate the second reversal transaction request to the service platform through the first terminal, or may also initiate the second reversal transaction request to the service platform through the second terminal due to internal transaction errors of the merchant. After the first signature information and the second signature information are obtained, the payment platform may respond to the second reversal transaction request to cancel the new first digital currency generated according to the wrong target payment request. For example, the service platform generates the second digital currency with the denomination of 3 and the new first digital currency with the denomination of 7 still in the frozen state based on the target transaction request according to the first digital currency with the denomination of 10, and cancels the first digital currency with the original denomination of 10. Then, in response to the second reversal transaction request for the target transaction request, the payment platform regenerates the first digital currency with the denomination of 10 according to the second digital currency with the denomination of 3 and the first digital currency with the denomination of 7 still in the frozen state, and cancels the second digital currency with the denomination of 3 and the first digital currency with the denomination of 7.

If the original denomination of the second digital currency is the sum of the digital currency balance in the first account corresponding to the first digital currency and the target payment amount, after the cancellation of the second digital currency, the fifth digital currency equal to the digital currency balance in the first account is generated, and the first digital currency in the frozen state is regenerated according to the difference between the second digital currency and the fifth digital currency (the target payment amount) and the first digital currency. For example, after the wrong target payment request is initiated, the user may initiate the second reversal transaction request to the service platform through the first terminal, or may also initiate the second reversal transaction request to the service platform through the second terminal due to the internal transaction errors of the merchant. After the first signature information and the second signature information are obtained, the payment platform may respond to the second reversal transaction request to cancel the new second digital currency generated according to the wrong target payment request. For example, the service platform generates the second digital currency with the denomination of 15 (the target payment amount is 3, and the digital currency balance in the first account is 12) and the new first digital currency with the denomination of 7 still in the frozen state based on the target transaction request according to the first digital currency with the denomination of 10, and cancels the first digital currency with the original denomination of 10. Then, in response to the second reversal transaction request for the target transaction request, the payment platform cancels the second digital currency with the denomination of 15 and the first digital currency with the denomination of 7 still in the frozen state, and the payment platform regenerates the fifth digital currency with the denomination of 12 still in the available state and the first digital currency with the denomination of 10.

According to the digital currency-based payment method provided by the embodiments of the present invention, it may be seen that the first digital currency corresponding to the pre-payment amount is in the frozen state based on the pre-configured pre-payment deposit smart contract, and at this time, the first user initiating the pre-payment request and the second user corresponding to the service provider are unable to use the second digital currency. When the target payment request for the first digital currency in the frozen state is received, the first digital currency in the frozen state is verified according to the pre-payment verification smart contract, and the second digital currency corresponding to the target payment amount is generated; or, the first digital currency in the frozen state is verified according to the pre-payment verification smart contract, and the second digital currency in the available state is generated according to the digital currency balance in the first account corresponding to the first digital currency. The denomination of the second digital currency is the sum of the target payment amount indicated by the target payment request and the digital currency balance. The second digital currency is then sent to the first account corresponding to the service provider, so that the service provider may use the second digital currency. Therefore, through the pre-payment smart contracts, the service provider is prevented from using the pre-paid digital currency in advance, and the transaction security in the pre-payment scenario is improved. Further, the unused pre-paid digital currency may also be revoked or canceled, so that the unused pre-paid digital currency is returned to the second account corresponding to the first user, which solves the problem that the user is unable to refund the pre-paid currency in the existing pre-payment scenario, thereby further improving the transaction security in the pre-payment scenario and protecting the rights and interests of the user.

Fig. 3 is a schematic diagram of main steps of a digital currency-based payment method when applied to a first terminal according to an embodiment of the present invention.

As shown in Fig. 3, a digital currency-based payment method provided by the embodiments of the present invention, when applied to the first terminal, mainly includes the following steps.

At step S301, in response to a first trigger, a pre-payment request is generated, and the pre-payment request is sent to a payment platform. The pre-payment request indicates a second account and a pre-payment amount.

At step S302, a first digital currency corresponding to the pre-payment amount is received, and the first digital currency in a frozen state is stored in the second account.

At step S303, in response to a second trigger, a target payment request for the first digital currency is generated, and the target payment request is sent to the payment platform.

It is understandable that the first trigger and the second trigger are generally initiated by a consumer.

In an embodiment of the present invention, the first terminal may generate the pre-payment request and/or the target payment request according to second signature information of the second account.

In an embodiment of the present invention, the first terminal may send the second signature information of the second account to the payment platform in response to a feedback of the payment platform on the pre-payment request and/or the target payment request.

In an embodiment of the present invention, the first terminal obtains a payment identifier or a payment image corresponding to a first account to determine the first account, and generates the target payment request according to the first account and the second trigger.

Here, the first terminal may obtain the first account corresponding to a service provider by obtaining the payment identifier (such as a payment code) of the first account, or scanning the payment image (such as a receipt two-dimensional code or a payment bar code) corresponding to the first account, and then generate multiple requests such as the pre-payment request, the target payment request, and a pre-payment recovery request according to the first account.

In an embodiment of the present invention, the first terminal may also receive a pre-payment recovery prompt sent by the payment platform and display the pre-payment recovery prompt, generate, when recovery information input according to the pre-payment recovery prompt is received, the pre-payment recovery request according to the first account and the second account included in the recovery information, and send the pre-payment recovery request to the payment platform.

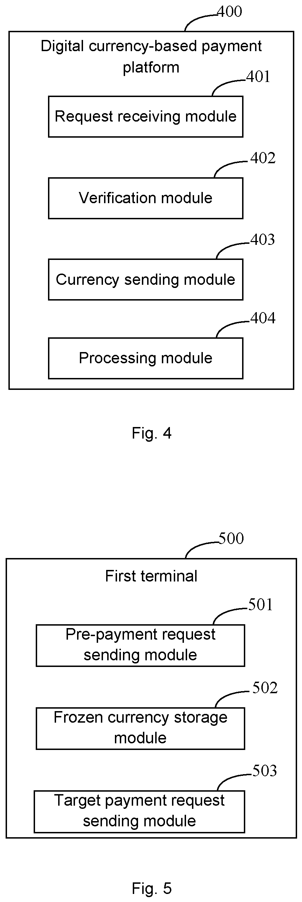

Fig. 4 is a schematic diagram of a digital currency-based payment platform according to an embodiment of the present invention.

As shown in Fig. 4, a digital currency-based payment platform 400 provided by the embodiments of the present invention includes a request receiving module 401, a verification module 402, and a currency sending module 403.

The request receiving module 401 is configured to receive a target payment request for a first digital currency in a frozen state, the first digital currency in the frozen state being generated based on a pre-payment request and a pre-configured pre-payment deposit smart contract.

The verification module 402 is configured to generate a second digital currency according to a target payment amount indicated by the target payment request, the first digital currency, and a pre-configured pre-payment verification smart contract. A denomination of the second digital currency corresponds to the target payment amount, or the denomination of the second digital currency is the sum of a digital currency balance in a first account corresponding to the first digital currency and the target payment amount, and the second digital currency is in an available state.

The currency sending module 403 is configured to send the second digital currency to the first account corresponding to the first digital currency.

In an embodiment of the present invention, the verification module 402 is further configured to generate a new first digital currency in the frozen state according to a difference between the first digital currency and the target payment amount, and the pre-payment verification smart contract.

In some embodiments, as shown in Fig. 4, the payment platform further includes a processing module 404.

The processing module 404 is further configured to acquire, in response to a cancellation request for the first digital currency being received, first signature information of the first account and second signature information of a second account corresponding to the pre-payment request; and set, in response to the first signature information and the second signature information are acquired, a state of the first digital currency to the available state, and send the first digital currency to the second account.

In an embodiment of the present invention, the processing module 404 is further configured to receive the pre-payment request of a first terminal, the pre-payment request indicating the second account and a pre-payment amount; and generate the first digital currency corresponding to the pre-payment amount according to the pre-payment request, a third digital currency corresponding to the second account, and the pre-configured pre-payment deposit smart contract, the state of the first digital currency being the frozen state.

In an embodiment of the present invention, the pre-payment request also indicates the first account. The processing module 404 is configured to write the pre-payment deposit smart contract and/or the first account to the first digital currency as a field of the first digital currency.

In an embodiment of the present invention, the verification module 402 is configured to determine whether an account indicated by the target payment request is the same as the first account; in response to the account of the target payment request being the same as the first account, generate the second digital currency; and in response to the account of the target payment request not being the same as the first account, reject the target payment request.

In an embodiment of the present invention, the verification module 402 is configured to sign, after the first digital currency is generated, the first digital currency by using third signature information of the payment platform, and generate and store first pre-payment transaction information according to the signed first digital currency, the second signature information, and the pre-payment deposit smart contract.

In an embodiment of the present invention, the verification module 402 is configured to write the pre-payment verification smart contract to the first digital currency as a field of the new first digital currency in the frozen state.

In an embodiment of the present invention, in response to the cancellation request being a revocation request sent by the first terminal, the processing module 404 is further configured to determine whether the first digital currency is revocable according to a pre-configured pre-payment revocation smart contract; in response to the first digital currency being revocable, obtain the first signature information and the second signature information; and in response to the first digital currency not being revocable, reject the revocation request.

In an embodiment of the present invention, the verification module 402 is further configured to sign the first digital currency by using the third signature information, and generate and store the first pre-payment transaction information according to the signed first digital currency, the second signature information of the second account, and the pre-payment deposit smart contract.

In an embodiment of the present invention, the pre-payment request also indicates a scenario identifier and/or a service identifier. The processing module 404 is configured to generate the first pre-payment transaction information according to the first digital currency, the second signature information, the pre-payment deposit smart contract, and the scenario identifier and/or the service identifier.

In an embodiment of the present invention, in response to the target payment request also indicates the scenario identifier and/or the service identifier, the verification module 402 is configured to determine whether the scenario identifier and/or the service identifier indicated by the target payment request this time are/is the same as the scenario identifier and/or the service identifier indicated by the first pre-payment transaction information, respectively; in response to the scenario identifier and/or the service identifier of the target payment request being the same as the scenario identifier and/or the service identifier of the first pre-payment transaction information, respectively, generate the second digital currency; and in response to the scenario identifier and/or the service identifier of the target payment request not being the same as the scenario identifier and/or the service identifier of the first pre-payment transaction information, respectively, reject the target payment request.

In an embodiment of the present invention, the pre-payment request also indicates a payment deadline and a payment limit corresponding to the payment deadline. The verification module 402 is further configured to generate, in response to monitoring that the current time meets the payment deadline, the second digital currency corresponding to the payment limit according to the payment limit and the pre-payment verification smart contract, and send the second digital currency corresponding to the payment limit to the first account.

In an embodiment of the present invention, the verification module 402 is configured to determine whether the target payment request includes signature information of a sending end of the target payment request, and in response to the target payment request includes signature information of the sending end of the target payment request, generate the second digital currency.

In an embodiment of the present invention, the verification module 402 is configured to generate second pre-payment transaction information according to the pre-payment verification smart contract, the signature information of the sending end, the third signature information, and a difference between the first digital currency and the target payment amount.

In an embodiment of the present invention, the processing module 404 is configured to determine the third digital currency in the second account and an available denomination of the third digital currency; and determine a generation method of the first digital currency according to the size of the available denomination and the pre-payment amount, and generate the first digital currency corresponding to the pre-payment amount according to the generation method.

In an embodiment of the present invention, the processing module 404 is configured to determine, when the available denomination is greater than the pre-payment amount, that the generation method is to split the third digital currency; and split the third digital currency into the first digital currency and a fourth digital currency, where the sum of the denomination of the first digital currency and the denomination of the fourth digital currency is equal to the available denomination, and a state of the fourth digital currency is an available state, and cancel the third digital currency.

In an embodiment of the present invention, the processing module 404 is configured to freeze the first digital currency in the first account or the second account corresponding to the pre-payment request or the payment platform.

In an embodiment of the present invention, the currency sending module 403 is configured to set, in response to the denomination of the second digital currency being equal to the target payment amount, a state of the second digital currency to the available state, and send the second digital currency in the available state to the first account.

In an embodiment of the present invention, the verification module 402 is further configured to send, when it is determined that the denomination of the first digital currency is less than the target payment amount, a pre-payment recovery prompt to the first terminal initiating the pre-payment request.

In an embodiment of the present invention, the verification module 402 is further configured to verify, when receiving a pre-payment recovery request sent by the first terminal according to the pre-payment recovery prompt, whether the first account and the second account indicated by the pre-payment recovery request are empty, and in response to the first account and a second account of the pre-payment recovery request not being empty, obtain the first signature information of the first account and the second signature information of the second account; and generate, in response to the first signature information and the second signature information being obtained, a new first digital currency in the frozen state according to the pre-configured pre-payment recovery smart contract, the amount indicated by the pre-payment recovery request, and the first digital currency.

In an embodiment of the present invention, the processing module 404 is further configured to receive a termination instruction.

The processing module 404 is further configured to set the state of the first digital currency to the available state according to the termination instruction and a pre-configured pre-payment termination smart contract, and send the first digital currency to the second account corresponding to the pre-payment request; and send a pre-payment termination prompt message to the first terminal initiating the pre-payment request and the second terminal corresponding to the first account.

In an embodiment of the present invention, the pre-payment request is received through a frozen payment interface. The processing module 404 is further configured to obtain, when a first reversal transaction request is received through the frozen payment interface, the first signature information of the first account and the second signature information of the second account corresponding to the pre-payment request; and set, in response to the first signature information and the second signature information being obtained, the state of the first digital currency to the available state, and send the first digital currency to the second account.

In an embodiment of the present invention, the target payment request is received through an unfrozen payment interface. The processing module 404 is further configured to obtain, when a second reversal transaction request is received through the unfrozen payment interface, the first signature information corresponding to the first account and the second signature information of the second account corresponding to the pre-payment request; and cancel, in response to the first signature information and the second signature information being obtained, the second digital currency, and update the first digital currency according to the target payment amount.

According to the digital currency-based payment platform provided by the embodiments of the present invention, it may be seen that the first digital currency corresponding to the pre-payment amount is in the frozen state based on the pre-configured pre-payment deposit smart contract, and at this time, a first user initiating the pre-payment request and a second user corresponding to a service provider are unable to use the second digital currency. When the target payment request for the first digital currency in the frozen state is received, the first digital currency in the frozen state is verified according to the pre-payment verification smart contract, and the second digital currency is generated; or, the first digital currency in the frozen state is verified according to the pre-payment verification smart contract, and the second digital currency in the available state is generated according to the digital currency balance in the first account corresponding to the first digital currency. The denomination of the second digital currency is the sum of the target payment amount indicated by the target payment request and the digital currency balance. The second digital currency is then sent to the first account corresponding to the service provider, so that the service provider may use the second digital currency. Therefore, through the pre-payment smart contracts, the service provider is prevented from using the pre-paid digital currency in advance, and the transaction security in a pre-payment scenario is improved. Further, the unused pre-paid digital currency may also be revoked or canceled, so that the unused pre-paid digital currency is returned to the second account corresponding to the first user, which solves the problem that the user is unable to refund the pre-paid currency in the existing pre-payment scenario, thereby further improving the transaction security in the pre-payment scenario and protecting the rights and interests of the user.

Fig. 5 is a schematic diagram of a first terminal based on digital currency payment according to an embodiment of the present invention.

As shown in Fig. 5, a first terminal 500 based on digital currency payment provided by the embodiments of the present invention includes a pre-payment request sending module 501, a frozen currency storage module 502, and a target payment request sending module 503.

The pre-payment request sending module 501 is configured to generate, in response to a first trigger, a pre-payment request, and send the pre-payment request to a payment platform. The pre-payment request indicates a second account and a pre-payment amount.

The frozen currency storage module 502 is configured to receive a first digital currency corresponding to the pre-payment amount, and store the first digital currency in a frozen state in the second account.

The target payment request sending module 503 is configured to generate, in response to a second trigger, a target payment request for the first digital currency, and send the target payment request to the payment platform.

In an embodiment of the present invention, the first terminal generates the pre-payment request and/or the target payment request according to second signature information of the second account.

In an embodiment of the present invention, the first terminal sends the second signature information of the second account to the payment platform in response to a feedback of the payment platform on the pre-payment request and/or the target payment request.

In an embodiment of the present invention, the first terminal obtains a payment identifier or a payment image corresponding to a first account to determine the first account, and generates the target payment request according to the first account and the second trigger.

In an embodiment of the present invention, the first terminal receives a pre-payment recovery prompt sent by the payment platform and display the pre-payment recovery prompt, generates, when receiving recovery information input according to the pre-payment recovery prompt, the pre-payment recovery request according to the first account and the second account included in the recovery information, and sends the pre-payment recovery request to the payment platform.

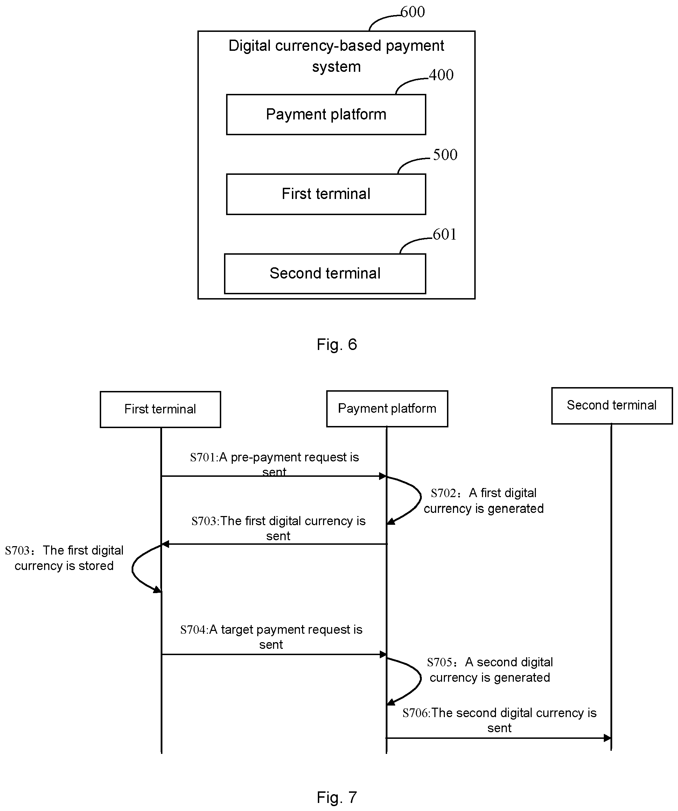

Fig. 6 is a schematic diagram of a digital currency-based payment system according to an embodiment of the present invention.

As shown in Fig. 6, a digital currency-based payment system 600 provided by the embodiments of the present invention includes a payment platform 400 provided by any of the above embodiments and a first terminal 500 provided by any of the above embodiments.

In an embodiment of the present invention, the payment system 600 may further include a second terminal 601.

The second terminal 601 is configured to receive a second digital currency, and store the second digital currency in a first account.

In an embodiment of the present invention, the second terminal 601 is configured to generate, in response to a third trigger, a target payment request for a first digital currency, and send the target payment request to the payment platform. It is understandable that the third trigger is generally initiated by a service provider (a merchant party).

In an embodiment of the present invention, the second terminal 601 is configured to receive payment information about a pre-payment recovery request sent by the payment platform, the payment information indicating the first account, the second account, and an amount of the pre-payment recovery request; and verify the pre-payment recovery request according to the payment information, and send first signature information corresponding to the first account to the payment platform when the verification passes.

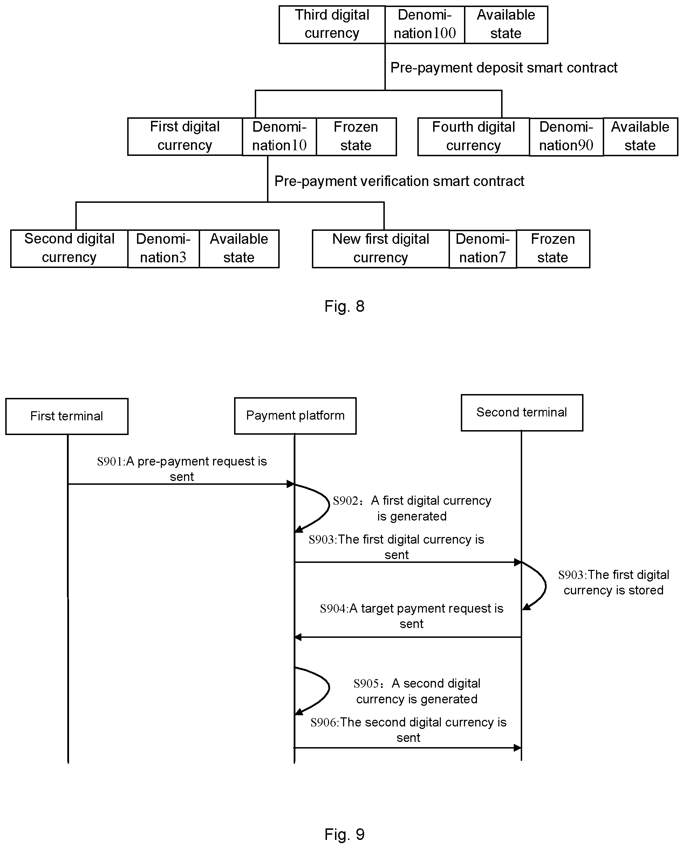

The digital currency-based payment method provided by the embodiments of the present invention will be described in detail below by taking application of the payment system as an example. Fig. 7 shows main steps included in the method, and Fig. 8 shows a generation process of a digital currency in a payment process. As shown in Fig. 7, the method mainly includes the following steps.

At step S701, a first terminal generates a pre-payment request in response to a first trigger of a consumer, and sends the pre-payment request to a payment platform. The pre-payment request indicates a second account and a pre-payment amount.

For example, the pre-payment amount is 10, the digital currency in the second account is a third digital currency in an available state, and an available denomination of the third digital currency is 100.

At step S702, the payment platform generates a first digital currency corresponding to the pre-payment amount according to the pre-payment request, the third digital currency corresponding to the second account, and a pre-configured pre-payment deposit smart contract. A state of the first digital currency is a frozen state.

In this embodiment, the payment platform splits the third digital currency with a denomination of 100 in the second account into the first digital currency with the denomination of 10 and a fourth digital currency with the denomination of 90. The first digital currency is in the frozen state and the fourth digital currency is in the available state.

At step S703, the payment platform sends the first digital currency to the first terminal, so that the first terminal stores the first digital currency in the frozen state in the second account.

At step S704, the first terminal generates a target payment request for the first digital currency in the frozen state in response to a second trigger of a first user, and sends the target payment request to the payment platform. The target payment request indicates a target payment amount.

For example, the target payment amount is 3.

At step S705, the payment platform generates a second digital currency corresponding to the target payment amount according to the target payment amount, the first digital currency, and a pre-configured pre-payment verification smart contract.

Here, the payment platform generates the second digital currency with the denomination of 3 and a new first digital currency with the denomination of 7 based on the pre-payment verification smart contract according to the first digital currency with the denomination of 10, and the payment platform sets a state of the second digital currency to a universal state. The new first digital currency is still in the frozen state.

At step S706, the payment platform sends the second digital currency to a second terminal, so that the second terminal stores the second digital currency in the first account.

It is understandable that the payment platform also sends the new first digital currency to the first terminal, so that the first digital currency in the frozen state is still stored in the second account. When a new target payment request for the new first digital currency is received again, the first digital currency may continue to be split based on the above process, so as to consume according to the pre-paid digital currency.

In the embodiments of the present invention, the first digital currency in the frozen state may also be stored on the payment platform or in the first account, and the target payment request may also be initiated by the service provider during the verification of the advance payment. The above process will be described in detail below with reference to a generation process of a digital currency shown in Fig. 8. As shown in Fig. 9, the method mainly includes the following steps.

At step S901, a first terminal generates a pre-payment request in response to a first trigger of a consumer, and sends the pre-payment request to a payment platform. The pre-payment request indicates a second account and a pre-payment amount.

For example, the pre-payment amount is 10, the digital currency in the second account is a third digital currency in an available state, and an available denomination of the third digital currency is 100.

At step S902, the payment platform generates a first digital currency corresponding to the pre-payment amount according to the pre-payment request, the third digital currency corresponding to the second account, and a pre-configured pre-payment deposit smart contract. A state of the first digital currency is a frozen state.

In this embodiment, the payment platform splits the third digital currency with the denomination of 100 in the second account into the first digital currency with the denomination of 10 and a fourth digital currency with the denomination of 90. The first digital currency is in the frozen state and the fourth digital currency is in the available state.

At step S903, the payment platform sends the first digital currency to a second terminal, so that the second terminal stores the first digital currency in the frozen state in the second account.

It is understandable that after the first digital currency is generated, the payment platform may also store the first digital currency locally and send a notification to the first terminal and/or the second terminal that the first digital currency is generated.

At step S904, the second terminal generates a target payment request for the first digital currency in the frozen state according to a third trigger of a service provider, and sends the target payment request to the payment platform. The target payment request indicates a target payment amount.

For example, the target payment amount is 3.

At step S905, the payment platform generates a second digital currency corresponding to the target payment amount according to the target payment amount, the first digital currency, and a pre-configured pre-payment verification smart contract.

Here, the payment platform generates the second digital currency with the denomination of 3 and a new first digital currency with the denomination of 7 based on the pre-payment verification smart contract according to the first digital currency with the denomination of 10, and the payment platform sets a state of the second digital currency to a universal state. The new first digital currency is still in the frozen state.

At step S906, the payment platform sends the second digital currency to the second terminal, so that the second terminal stores the second digital currency in the first account.

It is understandable that the payment platform also sends the new first digital currency to the second terminal, so that the second digital currency in the frozen state is still stored in the first account. When a new target payment request for the new first digital currency is received again, the first digital currency may continue to be split based on the above process, to consume according to the pre-paid digital currency.

In addition, in the embodiments of the present invention, there is no correspondence between a storage party of the first digital currency and an initiating end of the target payment request, for example, pre-payment may be achieved by using the embodiments shown in Fig. 7 and Fig. 9. In addition to the embodiments shown in Fig. 7 and Fig. 9, when implementing the payment method provided by the embodiments of the present invention, the target payment request may also be initiated by the second terminal when the first digital currency is stored in the first terminal. When the first digital currency is stored in the second terminal, the target payment request may also be initiated by the first terminal. In an embodiment, when the first digital currency is stored in the payment platform, the target payment request may be initiated by the first terminal or the second terminal.

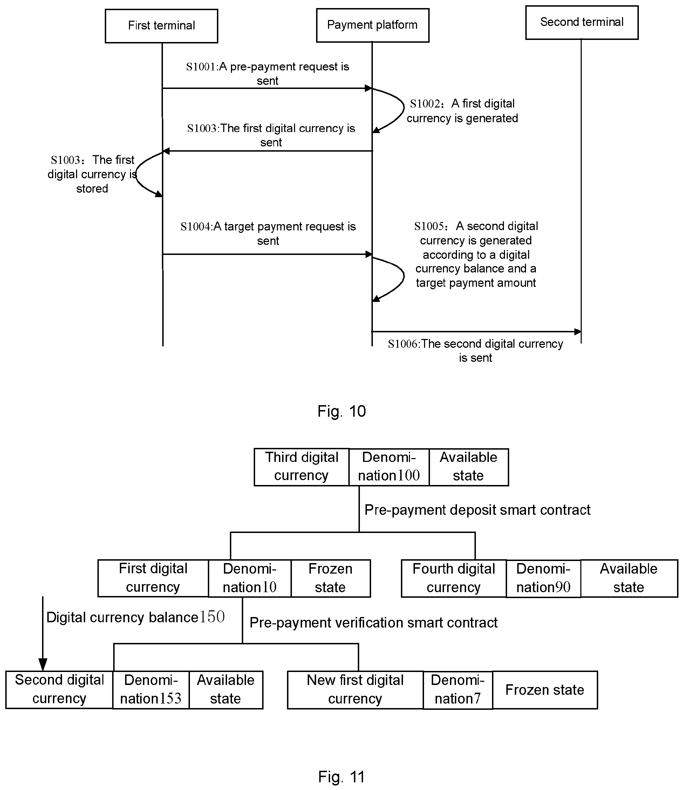

Another digital currency-based payment method provided by the embodiments of the present invention will be described in detail below by taking application of the payment system as an example. Fig. 10 shows main steps included in the method, and Fig. 11 shows a generation process of a digital currency in a payment process. As shown in Fig. 10, the method mainly includes the following steps.

At step S1001, a first terminal generates a pre-payment request in response to a first trigger of a consumer, and sends the pre-payment request to a payment platform. The pre-payment request indicates a second account and a pre-payment amount.

For example, the pre-payment amount is 10, the digital currency in the second account is a third digital currency in an available state, and an available denomination of the third digital currency is 100.

At step S1002, the payment platform generates a first digital currency corresponding to the pre-payment amount according to the pre-payment request, the third digital currency corresponding to the second account, and a pre-configured pre-payment deposit smart contract. A state of the first digital currency is a frozen state.

In this embodiment, the payment platform splits the third digital currency with a denomination of 100 in the second account into the first digital currency with the denomination of 10 and a fourth digital currency with the denomination of 90. The first digital currency is in the frozen state and the fourth digital currency is in the available state.

At step S1003, the payment platform sends the first digital currency to the first terminal, so that the first terminal stores the first digital currency in the frozen state in the second account.

At step S1004, the first terminal generates a target payment request for the first digital currency in the frozen state in response to a second trigger of a first user, and sends the target payment request to the payment platform. The target payment request indicates a target payment amount.

For example, the target payment amount is 3.

At step S1005, the payment platform generates a second digital currency according to the target payment amount, the first digital currency, a pre-configured pre-payment verification smart contract, and a digital currency balance in a first account corresponding to the first digital currency.

Here, assuming that the digital currency balance in the first account is 150, then the payment platform generates the second digital currency with the denomination of 153 and a new first digital currency with the denomination of 7 based on the pre-payment verification smart contract according to the first digital currency with the denomination of 10, and the payment platform sets a state of the second digital currency to the available state. The new first digital currency is still in the frozen state.

At step S1006, the payment platform sends the second digital currency to a second terminal, so that the second terminal stores the second digital currency in the first account.

It is understandable that the payment platform also sends the new first digital currency to the first terminal, so that the first digital currency in the frozen state is still stored in the second account. When a new target payment request for the new first digital currency is received again, the first digital currency may continue to be split based on the above process, to consume according to the pre-paid digital currency.

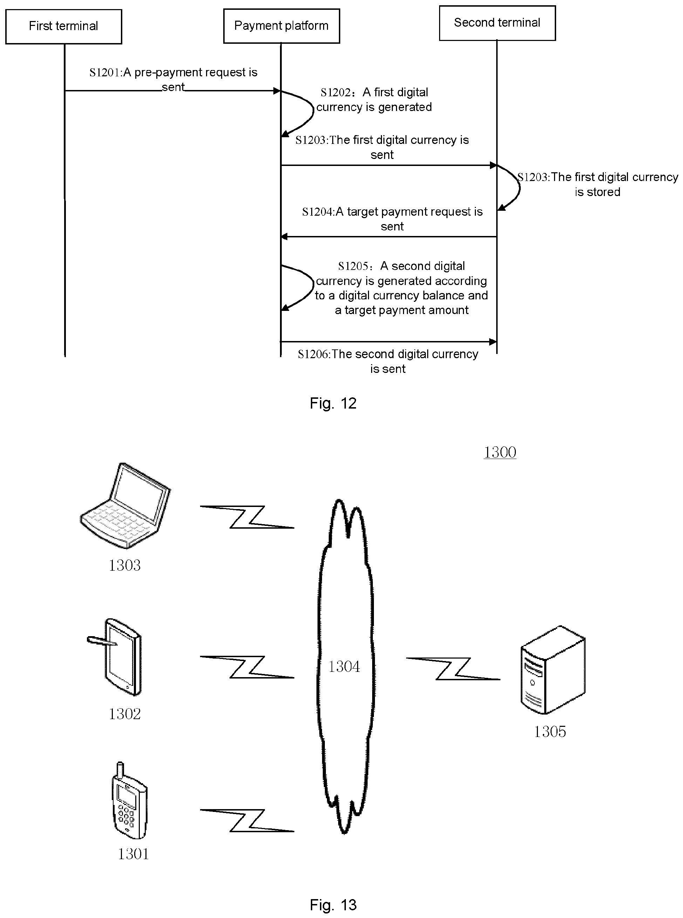

In the embodiments of the present invention, the first digital currency in the frozen state may also be stored on the payment platform or in the first account, and the target payment request may also be initiated by a service provider during the verification of the advance payment. The above process will be described in detail below with reference to a generation process of a digital currency shown in Fig. 11. As shown in Fig. 12, the method mainly includes the following steps.

At step S1201, a first terminal generates a pre-payment request in response to a first trigger of a consumer, and sends the pre-payment request to a payment platform. The pre-payment request indicates a second account and a pre-payment amount.

For example, the pre-payment amount is 10, the digital currency in the second account is a third digital currency in an available state, and an available denomination of the third digital currency is 100.

At step S1202, the payment platform generates a first digital currency corresponding to the pre-payment amount according to the pre-payment request, the third digital currency corresponding to the second account, and a pre-configured pre-payment deposit smart contract. A state of the first digital currency is a frozen state.

In this embodiment, the payment platform splits the third digital currency with a denomination of 100 in the second account into the first digital currency with the denomination of 10 and a fourth digital currency with the denomination of 90. The first digital currency is in the frozen state and the fourth digital currency is in the available state.

At step S1203, the payment platform sends the first digital currency to a second terminal, so that the second terminal stores the first digital currency in the frozen state in the second account.

It is understandable that after generating the first digital currency, the payment platform may also store the first digital currency locally and send a notification to the first terminal and/or the second terminal that the first digital currency is generated.

At step S1204, the second terminal generates a target payment request for the first digital currency in the frozen state according to a third trigger of a service provider, and sends the target payment request to the payment platform. The target payment request indicates a target payment amount.

For example, the target payment amount is 3.

At step S1205, the payment platform generates a second digital currency corresponding to the target payment amount according to the target payment amount, the first digital currency, a pre-configured pre-payment verification smart contract, and a digital currency balance in a first account corresponding to the first digital currency.

Here, assuming that the digital currency balance in the first account is 150, then the payment platform generates the second digital currency with the denomination of 153 and a new first digital currency with the denomination of 7 based on the pre-payment verification smart contract according to the first digital currency with the denomination of 10, and the payment platform sets a state of the second digital currency to the available state. The new first digital currency is still in the frozen state.

At step S1206, the payment platform sends the second digital currency to the second terminal, so that the second terminal stores the second digital currency in the first account.

It is understandable that the payment platform also sends the new first digital currency to the second terminal, so that the second digital currency in the frozen state is still stored in the first account. When a new target payment request for the new first digital currency is received again, the first digital currency may continue to be split based on the above process, to consume according to the pre-paid digital currency.

In addition, in the embodiments of the present invention, there is no correspondence between a storage party of the first digital currency and an initiating end of the target payment request, for example, pre-payment may be achieved by using the embodiments shown in Fig. 10 and Fig. 12. In addition to the embodiments shown in Fig. 10 and Fig. 12, when implementing the payment method provided by the embodiments of the present invention, the target payment request may also be initiated by the second terminal when the first digital currency is stored in the first terminal. When the first digital currency is stored in the second terminal, the target payment request may also be initiated by the first terminal. In an embodiment, when the first digital currency is stored in the payment platform, the target payment request may be initiated by the first terminal or the second terminal.

Fig. 13 shows an exemplary system architecture 1300 in which a digital currency-based payment method or a digital currency-based payment system according to an embodiment of the present invention may be applied.

As shown in Fig. 13, the system architecture 1300 may include terminal devices 1301, 1302 and 1303, a network 1304, and a server 1305. The network 1304 is configured to provide media for communication links between the terminal devices 1301, 1302 and 1303, and the server 1305. The network 1304 may include various connection types, such as wired, wireless communication links, or fiber optic cables.

A user may interact with the server 1305 by using the terminal devices 1301, 1302 and 1303 through the network 1304 to receive or send messages, etc. Various communication client applications, such as shopping applications, web browser applications, search applications, instant messaging tools, email clients, social platform software, etc., may be installed on the terminal devices 1301, 1302 and 1303.

The terminal devices 1301, 1302 and 1303 may be a variety of electronic devices having a display screen and supporting web browsing, including, but is not limited to, smartphones, tablets, laptops, desktops, and the like.

The server 1305 may be a server that provides various services, for example, a background management server that provides support for shopping websites browsed by the user through the terminal devices 1301, 1302 and 1303. The background management server may perform analysis and other processing on received data, such as a product information query request, and feed back a processing result to the terminal devices.

It is to be understood that the number of terminal devices, networks, and servers in Fig. 13 is merely illustrative. There may be any number of terminal devices, networks, and servers according to implementation requirements.

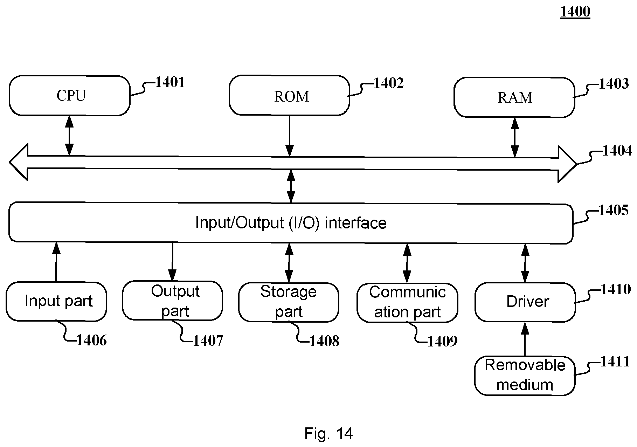

Referring to Fig. 14 below, which shows a schematic structural diagram of a computer system 1400 suitable for implementing a terminal device according to an embodiment of the present invention. The terminal device shown in Fig. 14 is merely an example and should not impose any restrictions on the functionality and scope of use of the embodiments of the present invention.

As shown in Fig. 14, the computer system 1400 includes a Central Processing Unit (CPU) 1401 that performs various suitable actions and processing according to programs stored in a Read Only Memory (ROM) 1402 or loaded from a storage part 1408 into a Random Access Memory (RAM) 1403. Various programs and data required for the operation of the system 1400 are also stored in the RAM 1403. The CPU 1401, the ROM 1402, and the RAM 1403 are connected to each other through a bus 1404. An Input/Output (I/O) interface 1405 is also connected to the bus 1404.

The following components are connected to the I/O interface 1405: an input part 1406 including a keyboard, a mouse, etc.; an output part 1407 including a Cathode Ray Tube (CRT), a Liquid Crystal Display (LCD), a speaker, etc.; a storage part 1408 including a hard disk, etc.; and a communication part 1409 including a network interface card such as a Local Area Network (LAN) card and a modem. The communication part 1409 performs communication processing via a network such as Internet. A driver 1410 is also connected to the I/O interface 1405 as needed. A removable medium 1411, such as a magnetic disk, an optical disk, a magneto-optical disk, or a semiconductor memory, is installed on the driver 1410 as needed, so that a computer program read therefrom is installed into the storage part 1408 as needed.

In particular, the process described above with reference to a flowchart may be implemented as a computer software program according to the disclosed embodiments of the present invention. For example, the disclosed embodiments of the present invention include a computer program product including a computer program carried on a computer-readable medium, the computer program including a program code for performing the method shown in the flowchart. In an embodiment, the computer program may be downloaded and installed from the network via the communication part 1409, and/or from the removable medium 1411. The computer program is executed by the CPU 1401 to perform the functions limited in the system of the present invention.

It is to be noted that the computer-readable medium shown in the present invention may be either a computer-readable signal medium or a computer-readable storage medium or any combination thereof. The computer-readable storage medium may be, but not limited to, for example, an electrical, magnetic, optical, electromagnetic, infrared, or semiconductor system, apparatus or device, or any combination thereof. More examples (a non-exhaustive list) of the computer-readable storage medium may include an electrical connector with at least one wire, a portable disk, a hard disk, an RAM, an ROM, an Erasable Programmable ROM (EPROM or a flash memory), an optical fiber, a Compact Disc ROM (CD-ROM), an optical storage device, a magnetic storage device, or any proper combination thereof. In the present invention, the computer-readable storage medium may be any physical medium including or storing a program, and the program may be used by or in combination with an instruction execution system, apparatus or device. However, in the present invention, the computer-readable signal medium may include a data signal in a baseband or propagated as part of a carrier, a computer-readable program code being carried therein. A plurality of forms may be adopted for the propagated data signal, including, but not limited to, an electromagnetic signal, an optical signal, or any proper combination. The computer-readable signal medium may also be any readable medium except the computer-readable storage medium, and the computer-readable medium may send, propagate, or transmit a program configured to be used by or in combination with an instruction execution system, apparatus, or device The program code in the computer-readable medium may be transmitted with any proper medium, including, but not limited to, radio, a wire, an optical cable, Radio Frequency (RF), etc., or any proper combination thereof.

The flowcharts and block diagrams in the drawings illustrate the architecture, functionality, and operation of systems, methods, and computer program products that may be realized according to various embodiments of the present invention. In this regard, each block in the flowchart or block diagram may represent a module, a program segment, or a portion of a code, which includes at least one executable instruction for implementing the specified logic function. It is also to be noted that in some alternative implementations, the functions marked in the blocks may also occur in a different order from those marked in the drawings. For example, two blocks shown in succession may, in fact, be executed substantially in parallel, and sometimes in a reverse order, depending upon the functionality involved. It is also to be noted that each block in the block diagram or flowchart, and a combination of blocks in the block diagram or flowchart may be implemented by a special purpose hardware-based system which performs a specified function or operation, or a combination of special purpose hardware and computer instructions.

The units described in the embodiments of the present invention may be implemented by means of software or hardware. The units described may also be provided in a processor, for example, a processor may be described as including a pre-payment request receiving unit, a frozen currency storage module, and a target payment request sending module. The names of the units do not constitute a limitation on the unit itself in some cases, for example, the request receiving unit may also be described as "a module receiving a target payment request of a first digital currency in a frozen state".

As another aspect, the present invention further provides a computer-readable medium, which may be included in the apparatus described in the above embodiments, or may also be present separately and not fitted into the apparatus. The above computer-readable medium carries at least one program. The at least one program is executed by the apparatus to cause the apparatus to include: receiving a target payment request for a first digital currency in a frozen state, the first digital currency in the frozen state being generated based on a pre-payment request and a pre-configured pre-payment deposit smart contract; generating a second digital currency according to a target payment amount indicated by the target payment request, the first digital currency, and a pre-configured pre-payment verification smart contract, wherein a denomination of the second digital currency corresponds to the target payment amount, or the denomination of the second digital currency is the sum of a digital currency balance in a first account corresponding to the first digital currency and the target payment amount, and the second digital currency is in an available state; and sending the second digital currency to the first account corresponding to the first digital currency.

According to the technical solutions of the embodiments of the present invention, the first digital currency corresponding to the pre-payment amount is in the frozen state based on the pre-configured pre-payment deposit smart contract, and at this time, a first user initiating the pre-payment request and a second user corresponding to a service provider are unable to use the second digital currency. When the target payment request for the first digital currency in the frozen state is received, the first digital currency in the frozen state is verified according to the pre-payment verification smart contract, and the second digital currency corresponding to the target payment amount is generated; or, the first digital currency in the frozen state is verified according to the pre-payment verification smart contract, and the second digital currency in the available state is generated according to the digital currency balance in the first account corresponding to the first digital currency. The denomination of the second digital currency is the sum of the target payment amount indicated by the target payment request and the digital currency balance. The second digital currency is then sent to the first account corresponding to the service provider, so that the service provider may use the second digital currency. Therefore, through the pre-payment smart contracts, the service provider is prevented from using the pre-paid digital currency in advance, and the transaction security in the pre-payment scenario is improved. Further, the unused pre-paid digital currency may also be revoked or canceled, so that the unused pre-paid digital currency is returned to a second account corresponding to the first user, which solves the problem that the user is unable to refund the pre-paid currency in the existing pre-payment scenario, thereby further improving the transaction security in the pre-payment scenario and protecting the rights and interests of the user.

The above implementation does not constitute a limitation to the scope of protection of the present invention. Those skilled in the art should understand that various modifications, combinations, sub-combinations, and substitutions can occur, depending upon design requirements and other factors. Any modifications, equivalent substitutions, improvements, etc. within the spirit and scope of the present invention shall be included in the scope of protection of the present invention.

## Claims

1. A digital currency-based payment method, the method is applied to a payment platform, comprising:
receiving a target payment request for a first digital currency in a frozen state, the first digital currency in the frozen state being generated based on a pre-payment request and a pre-configured pre-payment deposit smart contract;
generating a second digital currency according to a target payment amount indicated by the target payment request, the first digital currency, and a pre-configured pre-payment verification smart contract, wherein a denomination of the second digital currency corresponds to the target payment amount; or the denomination of the second digital currency is the sum of a digital currency balance in a first account corresponding to the first digital currency and the target payment amount, and the second digital currency is in an available state;
sending the second digital currency to the first account corresponding to the first digital currency.

2. The method as claimed in claim 1, wherein the method further comprising:
a new first digital currency in the frozen state is generated according to a difference between the first digital currency and the target payment amount, and the pre-payment verification smart contract.

3. The method as claimed in claim 1 or 2, wherein the method further comprising:
in response to a cancellation request for the first digital currency being received, acquiring first signature information of the first account and second signature information of a second account corresponding to the pre-payment request;
in response to the first signature information and the second signature information being acquired, setting a state of the first digital currency to the available state, and sending the first digital currency to the second account.

4. The method as claimed in claim 1, wherein before the target payment request for the first digital currency in the frozen state is received, the method further comprising:
receiving the pre-payment request of a first terminal, the pre-payment request indicating a second account and a pre-payment amount;
generating the first digital currency corresponding to the pre-payment amount according to the pre-payment request, a third digital currency corresponding to the second account, and the pre-configured pre-payment deposit smart contract, a state of the first digital currency being the frozen state.

5. The method as claimed in claim 4, wherein the pre-payment request also indicates the first account, the method further comprising:
writing the pre-payment deposit smart contract and/or the first account to the first digital currency as a field of the first digital currency.

6. The method as claimed in claim 5, wherein,
determining whether an account indicated by the target payment request is the same as the first account;
in response to the account of the target payment request being the same as the first account, generating the second digital currency;
in response to the account of the target payment request not being the same as the first account, rejecting the target payment request.

7. The method as claimed in claim 4, wherein the pre-payment request also indicates a payment deadline and a payment limit corresponding to the payment deadline, the method further comprising:
in response to monitoring that a current time meets the payment deadline, generating the second digital currency according to the payment limit and the pre-payment verification smart contract, wherein the denomination of the second digital currency corresponds to the payment limit, or the denomination of the second digital currency is the sum of the payment limit and the digital currency balance in the first account.

8. The method as claimed in claim 2, wherein the method further comprising:
writing the pre-payment verification smart contract to the first digital currency as a field of the new first digital currency in the frozen state.

9. The method as claimed in claim 3, wherein in response to the cancellation request being a revocation request sent by the first terminal, the method further comprises:
determining whether the first digital currency is revocable according to a pre-configured pre-payment revocation smart contract;
in response to the first digital currency being revocable according to the pre-configured pre-payment revocation smart contract, obtaining the first signature information and the second signature information;
in response to the first digital currency not being revocable according to the pre-configured pre-payment revocation smart contract, rejecting the revocation request.

10. The method as claimed in claim 9, wherein after the second digital currency is generated, the method further comprising:
signing the first digital currency by using third signature information of the payment platform, and generating and storing first pre-payment transaction information according to the signed first digital currency, the second signature information, and the pre-payment deposit smart contract.

11. The method as claimed in claim 10, wherein the pre-payment request also indicates a scenario identifier and/or a service identifier, the method further comprising:
generating the first pre-payment transaction information according to the first digital currency, the second signature information, the pre-payment deposit smart contract, and the scenario identifier and/or the service identifier.

12. The method as claimed in claim 11, wherein in response to the target payment request also indicates the scenario identifier and/or the service identifier, the method further comprising:
determining whether the scenario identifier and/or the service identifier indicated by the target payment request are/is the same as the scenario identifier and/or the service identifier indicated by the first pre-payment transaction information, respectively;
in response to the scenario identifier and/or the service identifier of the target payment request being the same as the scenario identifier and/or the service identifier of the first pre-payment transaction information, respectively, generating the second digital currency;
in response to the scenario identifier and/or the service identifier of the target payment request not being the same as the scenario identifier and/or the service identifier of the first pre-payment transaction information, respectively, rejecting the target payment request.

13. The method as claimed in claim 1, wherein the method further comprising:
determining whether the target payment request comprises signature information of a sending end of the target payment request, and in response to the target payment request comprises signature information of the sending end of the target payment request, generating the second digital currency.

14. The method as claimed in claim 10, the method further comprising:
generating second pre-payment transaction information according to the pre-payment verification smart contract, the signature information of the sending end, the third signature information, and the difference between the first digital currency and the target payment amount.

15. The method as claimed in claim 4, wherein generating the first digital currency corresponding to the pre-payment amount according to the pre-payment request, the third digital currency corresponding to the second account, and the pre-configured pre-payment deposit smart contract comprises:
determining the third digital currency in the second account and an available denomination of the third digital currency;
determining a generation method of the first digital currency according to the size of the available denomination and the pre-payment amount, and generating the first digital currency corresponding to the pre-payment amount according to the generation method.

16. The method as claimed in claim 15, wherein the method further comprising:
in response to the available denomination being greater than the pre-payment amount, determining the generation method is to split the third digital currency;
splitting the third digital currency into the first digital currency and a fourth digital currency, wherein the sum of the denomination of the first digital currency and the denomination of the fourth digital currency is equal to the available denomination, and a state of the fourth digital currency is the available state, and the third digital currency is canceled.

17. The method as claimed in claim 1, wherein the method further comprising:
freezing the first digital currency in the first account or the second account corresponding to the pre-payment request or the payment platform.

18. The method as claimed in claim 1, wherein the method further comprising:
in response to the denomination of the second digital currency being equal to the target payment amount,
setting the second digital currency to the available state, sending the second digital currency in the available state to the first account.

19. The method as claimed in claim 1, wherein the method further comprising:
in response to the denomination of the first digital currency is less than the target payment amount, sending a pre-payment recovery prompt to a first terminal initiating the pre-payment request.

20. The method as claimed in claim 19, wherein the method further comprising:
in response to receiving a pre-payment recovery request sent by the first terminal according to the pre-payment recovery prompt, verifying whether the first account and a second account indicated by the pre-payment recovery request are empty, and in response to the first account and a second account of the pre-payment recovery request not being empty, obtaining the first signature information of the first account and the second signature information of the second account; and
in response to the first signature information and the second signature information being obtained, generating a new first digital currency in the frozen state according to the pre-configured pre-payment recovery smart contract, an amount indicated by the pre-payment recovery request, and the first digital currency.

21. The method as claimed in claim 1, wherein the method further comprising:
receiving a termination instruction;
setting a state of the first digital currency to the available state according to the termination instruction and a pre-configured pre-payment termination smart contract, and sending the first digital currency to the second account corresponding to the pre-payment request;
sending a pre-payment termination prompt message to the first terminal initiating the pre-payment request and a second terminal corresponding to the first account.

22. The method as claimed in claim 1, wherein receiving the pre-payment request through a frozen payment interface further comprises:
in response to a first reversal transaction request being received through the frozen payment interface, obtaining the first signature information of the first account and the second signature information of the second account corresponding to the pre-payment request; and
in response to the first signature information and the second signature information being obtained, setting a state of the first digital currency to the available state, and sending the first digital currency to the second account.

23. The method as claimed in claim 1, wherein receiving the target payment request through an unfrozen payment interface further comprises:
in response to a second reversal transaction request being received through the unfrozen payment interface, obtaining the first signature information corresponding to the first account and the second signature information of the second account corresponding to the pre-payment request; and
in response to the first signature information and the second signature information being obtained, canceling the second digital currency, and updating the first digital currency according to the target payment amount.

24. The method as claimed in claim 23, wherein in response to the denomination of the second digital currency being the sum of the digital currency balance and the target payment amount, after the first signature information and the second signature information is obtained, the method further comprises:
generating a fifth digital currency equal to the digital currency balance.

25. The method as claimed in claim 1, wherein in response to the denomination of the second digital currency being the sum of the digital currency balance and the target payment amount, after the second digital currency is generated, the method further comprises:
canceling the fifth digital currency equal to the digital currency balance in the first account.

26. A digital currency-based payment method, the method is applied to a first terminal, comprising:
in response to a first trigger, generating a pre-payment request, and sending the pre-payment request to a payment platform, the pre-payment request indicating a second account and a pre-payment amount;
receiving a first digital currency corresponding to the pre-payment amount, and storing the first digital currency in a frozen state in the second account; and
in response to a second trigger, generating a target payment request for the first digital currency, and sending the target payment request to the payment platform.

27. The method as claimed in claim 26, the method further comprising:
generating the pre-payment request and/or the target payment request according to second signature information of the second account;
and/or,
in response to a feedback of the payment platform on the pre-payment request and/or the target payment request, sending the second signature information of the second account to the payment platform.

28. The method as claimed in claim 26, the method further comprising:
obtaining a payment identifier or a payment image corresponding to a first account to determine the first account;
generating the target payment request according to the first account and the second trigger.

29. The method as claimed in claim 28, the method further comprising:
receiving a pre-payment recovery prompt sent by the payment platform, and displaying the pre-payment recovery prompt;
in response to receiving recovery information input according to the pre-payment recovery prompt, generating the pre-payment recovery request according to the first account and the second account comprised in the recovery information, and sending the pre-payment recovery request to the payment platform.

30. A digital currency-based payment platform, comprising:
a request receiving module, a verification module, and a currency sending module, wherein,
the request receiving module, configured to receive a target payment request for a first digital currency in a frozen state, the first digital currency in the frozen state being generated based on a pre-payment request and a pre-configured pre-payment deposit smart contract;
the verification module, configured to generate a second digital currency according to a target payment amount indicated by the target payment request, the first digital currency, and a pre-configured pre-payment verification smart contract, wherein a denomination of the second digital currency corresponds to the target payment amount; or the denomination of the second digital currency is the sum of a digital currency balance in a first account corresponding to the first digital currency and the target payment amount, and the second digital currency is in an available state; and
the currency sending module, configured to send the second digital currency to the first account corresponding to the first digital currency.

31. A first terminal based on digital currency payment, comprising:
a pre-payment request sending module, a frozen currency storage module, and a target payment request sending module, wherein,
the pre-payment request sending module, configured to generate, in response to a first trigger, a pre-payment request, and send the pre-payment request to a payment platform, the pre-payment request indicating a second account and a pre-payment amount;
the frozen currency storage module, configured to receive a first digital currency corresponding to the pre-payment amount, and store the first digital currency in a frozen state in the second account;
the target payment request sending module, configured to generate, in response to a second trigger, a target payment request for the first digital currency, and send the target payment request to the payment platform.

32. A digital currency-based payment system, comprising:
the payment platform according to claim 30 and the first terminal according to claim 31.

33. The payment system as claimed in claim 32, further comprising:
a second terminal,
wherein,
the second terminal, configured to receive a second digital currency, and store the second digital currency in a first account; and/or,
the second terminal, configured to generate, in response to a third trigger, a target payment request for a first digital currency, and send the target payment request to the payment platform.

34. The payment system as claimed in claim 33, wherein,
the second terminal, configured to receive payment information about a pre-payment recovery request sent by the payment platform, the payment information indicating an amount indicated by the first account, a second account, and the pre-payment recovery request; and verify the pre-payment recovery request according to the payment information, and send first signature information of the first account to the payment platform when the verification passes.

35. An electronic device as claimed in digital currency payment, comprising:
at least one processor; and
a storage apparatus, configured to store at least one program;
the at least one program is executed by the at least one processor to cause the at least one processor to perform the method according to any one of claims 1 to 25 and 26 to 29.

36. A computer readable medium, on which a computer program is stored, wherein the program is executed by a processor to perform the method according to any one of claims 1 to 25 and 26 to 29.
